# EUROPÄISCHE PATENTANMELDUNG

(11) **EP 4 715 268 A2**
(43) Veröffentlichungstag der Anmeldung: **25.03.2026**
(21) Anmeldenummer: 25188731.1
(22) Anmeldetag: 10.07.2025
(51) Int. Cl.: F24C 15/20, B01D 45/08

(54) **EINSTRÖMGITTER, LEITVORRICHTUNG, LABYRINTH-FILTER, FILTEREINSATZ, DUNSTABZUG UND KOMBINATIONSGERÄT**

(30) Priorität: 20.09.2024 DE 102024127293
(71) Anmelder: Berbel Ablufttechnik GmbH, 48432 Rheine (DE)
(72) Erfinder: Howest, Andreas, 48607 Ochtrup (DE); Scholz, Berthold, 48496 Hopsten (DE); Spielbusch, Patrick, 48268 Greven (DE)
(74) Vertreter: Schneiders & Behrendt Bochum

(57) **Zusammenfassung**

Die Erfindung betrifft ein Einströmgitter (1) zum Einsatz in einer Luftansaugöffnung (2) eines Dunstabzugs (3). Außerdem betrifft die Erfindung eine Leitvorrichtung (18) zur Ableitung eines oder mehrerer Bestandteile von Kochdünsten (14), insbesondere Fett und/oder Öl, aus einem Luftstrom (8), der eine von oben nach unten gerichtete Hauptströmungsrichtung (7) durch die Leitvorrichtung (18) aufweist. Ferner betrifft die Erfindung einen Labyrinth-Filter (35) zur Abscheidung eines oder mehrerer Bestandteile von Kochdünsten (14), insbesondere Fett und/oder Öl, aus einem Luftstrom (8). Zudem betrifft die Erfindung einen Filtereinsatz (50) zur Filterung eines oder mehrerer Bestandteile von Kochdünsten (14), insbesondere Fett und/oder Öl, aus einem Luftstrom (8), wobei der Filtereinsatz (50) einen hohlen Grundkörper (51) gebildet aus einem solchen Labyrinth-Filter (35) oder mehreren Labyrinth-Filtern (35) aufweist. Gegenstand der Erfindung ist außerdem ein Dunstabzug (3) zum Abzug von Kochdünsten (14) an einem Kochfeld (55) mittels eines Luftstromes (8), mit einem solchen Filtereinsatz (50). Ferner betrifft die Erfindung auch ein Kombinationsgerät (59) mit einem Kochfeld (55) und einem solchen Dunstabzug (3), wobei der Dunstabzug (3) als Kochfeldabzug zum Abzug von Kochdünsten (14) von über dem Kochfeld (55) in nach unten weisender Richtung (60) integriert ist, wobei der Filtereinsatz (50) in die in dem Kochfeld (55) ausgebildete Luftansaugöffnung (2) des Dunstabzugs (3) einsetzbar und aus dieser entnehmbar ist.

## Beschreibung

Die Erfindung betrifft ein Einströmgitter zum Einsatz in einer Luftansaugöffnung eines Dunstabzugs mit mindestens einem Rahmen, einer am Rahmen gebildeten Lamellenstruktur, wobei die Lamellenstruktur mehrere zueinander beabstandet angeordnete Gitterlamellen aufweist, die mit dem Rahmen verbunden sind, wobei die Gitterlamellen jeweils sich entlang einer Hauptströmungsrichtung eines Luftstromes erstreckende Luftleitflächen bilden, wobei der Luftstrom an den Gitterlamellen in Teilluftströme aufgeteilt wird.

Außerdem betrifft eine Leitvorrichtung zur Ableitung eines oder mehrerer Bestandteile von Kochdünsten, insbesondere Fett und/oder Öl, aus einem Luftstrom, der eine von oben nach unten gerichtete Hauptströmungsrichtung durch die Leitvorrichtung aufweist.

Ferner betrifft die Erfindung einen Labyrinth-Filter zur Abscheidung eines oder mehrerer Bestandteile von Kochdünsten, insbesondere Fett und/oder Öl, aus einem Luftstrom.

Zudem betrifft die Erfindung einen Filtereinsatz zur Filterung eines oder mehrerer Bestandteile von Kochdünsten, insbesondere Fett und/oder Öl, aus einem Luftstrom.

Gegenstand der Erfindung ist außerdem ein Dunstabzug zum Abzug von Kochdünsten an einem Kochfeld mittels eines Luftstromes, mit einem Abzugsgehäuse, das wenigstens eine Luftansaugöffnung und wenigstens einen Luftauslass für den Luftstrom aufweist, und wenigstens einem in dem Abzugsgehäuse angeordneten Lüfter zur Erzeugung des Luftstromes, wenigstens einem solchen in dem Abzugsgehäuse in dem Luftstrom zwischen Luftansaugöffnung und Lüfter angeordneten Filtereinsatz, wobei der Luftstrom in dem Abzugsgehäuse von der Luftansaugöffnung über den Filtereinsatz zu dem Lüfter geführt und von dem Lüfter über den Luftauslass aus dem Abzugsgehäuse geblasen wird.

Ferner betrifft die Erfindung auch ein Kombinationsgerät mit einem Kochfeld und einem solchen Dunstabzug, wobei der Dunstabzug als Kochfeldabzug zum Abzug von Kochdünsten von über dem Kochfeld in nach unten weisender Richtung integriert ist, wobei der Filtereinsatz in die in dem Kochfeld ausgebildete Luftansaugöffnung des Dunstabzugs einsetzbar und aus dieser entnehmbar ist.

Ein eingangs genanntes Einströmgitter ist beispielsweise bekannt durch die Kochfeldabzüge der Anmelderin vom Typ "BKA 90 DL". Die Gitterlamellen des Einströmgitters dienen hier vor allem zum Schutz des Kochfelds vor in die Luftansaugöffnung ansonsten fallenden Gegenständen. Die hier gewählte geometrische Form der Gitterlamellen soll einen geringen Strömungswiderstand bieten, um den Dunstabzug möglichst effizient zu betreiben. Eine weitere Funktion bietet das vorbekannte Einströmgitter bisher nicht.

Es ist daher Aufgabe der Erfindung ein verbessertes Einströmgitter anzugeben, das effektiv zur Abscheidung von Bestandteilen aus Kochdünsten, insbesondere Fett und Öl, beiträgt und einen effizienten Betrieb des Dunstabzugs ermöglicht.

Gelöst wird diese Aufgabe durch ein Einströmgitter mit den Merkmalen des Anspruchs 1.

Dadurch, dass die Luftleitflächen dazu ausgebildet sind, die Teilluftströme des aufgeteilten Luftstroms jeweils in Richtung einer durch die Gitterlamellen gebildeten Prallkante zu lenken, wobei die Teilluftströme an den Prallkanten umgelenkt und von den Luftleitflächen weiter in Hauptströmungsrichtung des Luftstromes durch das Einströmgitter an den Gitterlamellen vorbeigeführt werden, lassen sich Bestandteile der Kochdünste, insbesondere Fett und Öl, bereits in dem Einströmgitter abscheiden, sodass das Einströmgitter neben dem Schutz der Luftansaugöffnung eine zusätzliche Funktion erfüllt. Der Strömungswiderstand, den ein Einströmgitter an der Luftansaugöffnung eines Dunstabzugs zweifelsohne bildet, wird bei dem erfindungsgemäßen Einströmgitter zur zusätzlichen Abscheidung von Bestandteilen der Kochdünste genutzt. Der Luftstrom wird wie an den Gitterlamellen der vorbekannten Einströmgitter üblich in mehrere Teilluftströme aufgeteilt. Stromabwärts dieser Aufteilung des Luftstromes erfolgt eine erste, effektive Abscheidung von Bestandteilen der Kochdünste aus dem Luftstrom. Da der vom Lüfter des Dunstabzugs erzeugte Luftstrom, durch die Gitterlamellen aufgeteilt, in Teilluftströmen gegen die Prallkanten der Gitterlamellen geleitet wird, lassen sich Bestandteile der Kochdünste, wie Fett und Öl, bereits im Einströmgitter abscheiden. Die zwischen den Luftleitflächen der Gitterlamellen durch das Einströmgitter geführten Teilluftströme werden so von schweren Bestandteilen der Kochdünste, wie Öl und Fett, befreit. Die Luftleitflächen leiten die von den Gitterlamellen im Einströmgitter gebildeten Teilluftströme des Luftstromes effizient auf die Prallkanten der Gitterlamellen, wobei mit der Umlenkung der Teilluftströme an den Prallkannten bereits erste Bestandteile der Kochdünste, wie Fett und Öl, aus dem Luftstrom abgeschieden werden. Nach der Abscheidung erster Bestandteile der Kochdünste an den Prallkanten der Gitterlamellen, wird der aufgeteilte Luftstrom weiter durch das Einströmgitter geleitet. Die Umlenkung des aufgeteilten Luftstromes an den Prallkanten erhöht zwar minimal den Strömungswiderstand des Einströmgitters, dafür wird aber eine besonders effektive Abscheidung von Bestandteilen der Kochdünste, wie Fett und Öl, bereits an der Luftansaugöffnung des Dunstabzugs erreicht. Stromabwärts des Einströmgitters nachfolgende Komponenten des Dunstabzugs werden so weniger mit Fett und Öl aus dem Luftstrom verunreinigt, sodass diese seltener gereinigt werden müssen. Mit der Aufteilung des Luftstromes stromaufwärts der Prallkanten im Einströmgitter, lassen sich die Teilluftströme gezielt auf die Prallkanten leiten, die an einer Seitenwand der Gitterlamellen gebildet sind. Mit der Umlenkung an den Prallkanten, werden die Bestandteile der Kochdünste, wie Fett und Öl, effektiv aus dem aufgeteilten Luftstrom abgeschieden.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß einer vorteilhaften Ausgestaltung der Erfindung ist vorgesehen, dass das Einströmgitter als Fliehkraftabscheider zur Abscheidung eines oder mehrerer Bestandteile von Kochdünsten ausgebildet ist, sodass sich einer oder mehrere Bestandteile der Kochdünste, insbesondere Fett und Öl, mittels Fliehkraft aus dem umgelenkten Luftstrom trennen und an den Prallkanten der Gitterlamellen und/oder an den Luftleitfläche der Gitterlamellen ablagern. Mittels Fliehkraft werden also die Bestandteile der Kochdünste, insbesondere Fett und Öl, aus dem aufgeteilten Luftstrom an den Prallkanten der Gitterlamellen des Einströmgitters abgeschieden. Dies sorgt für eine erste effektive Abscheidung an der Luftansaugöffnung eines Dunstabzugs. Analog zu den Gitterlamellen der bereits bekannten Einströmgitter wird der Luftstrom in mehrere Teilluftströme aufgeteilt. Im Anschluss an die Aufteilung des Luftstroms erfolgt eine erste effektive Abscheidung von Bestandteilen der Kochdünste im Fliehkraftabscheider des Einströmgitters. Aufgrund der Aufteilung des vom Lüfter des Dunstabzugs erzeugten Luftstroms durch die Gitterlamellen erfolgt eine zielgerichtete Leitung gegen die Prallkanten der Gitterlamellen, wodurch mittels Fliehkraft im aufgeteilten Luftstrom mitgeführte Bestandteile der Kochdünste, wie Fett und Öl, bereits im Einströmgitter abgeschieden werden. Somit erfolgt bereits an der Luftansaugöffnung des Dunstabzugs eine erste, effektive Abscheidung von Bestandteilen der Kochdünste mittels Fliehkraft aus den an Prallkanten umgelenkten Teilluftströmen. Die Luftleitflächen der Gitterlamellen lenken die Teilluftströme des Luftstroms effizient auf die Prallkanten der Gitterlamellen zu, wobei durch die Umlenkung der Teilluftströme an den Prallkanten bereits eine erste Abscheidung von Bestandteilen der Kochdünste, wie Fett und Öl, aus dem Luftstrom mittels Fliehkraft erfolgt. Die gegenüber der Luft des Luftstromes schwereren Bestandteile der Kochdünste, wie Fett und Öl, werden bei der Umlenkung der Teilluftströme an den Prallkanten der Gitterlamellen aufgrund von Fliehkraft aus den umgelenkten Teilluftströmen heraus beschleunigt und lagern sich an den Prallkannten und den Luftleitflächen der Gitterlamellen im Einströmgitter ab. Im Anschluss an diese Abscheidung erster Bestandteile der Kochdünste wird der aufgeteilte Luftstrom mit hoher Effizienz durch das Einströmgitter geleitet. Die Umlenkung des aufgeteilten Luftstroms an den Prallkanten führt zu einer minimalen Erhöhung des Strömungswiderstands des Einströmgitters. Dem gegenüber steht jedoch eine besonders effektive Abscheidung von Bestandteilen der Kochdünste, wie Fett und Öl, mittels Fliehkraft bereits an der Luftansaugöffnung des Dunstabzugs. Dadurch dass stromabwärts des Einströmgitters nachfolgende Komponenten des Dunstabzugs weniger mit Fett und Öl aus dem Luftstrom verunreinigt werden, ist eine seltenere Reinigung derselben erforderlich. Die Aufteilung des Luftstroms stromaufwärts der Prallkanten im Einströmgitter erlaubt eine gezielte Leitung der Teilluftströme auf die Prallkanten. Die Teilluftströme können an den Prallkanten gezielt umgelenkt werden, ohne das Verwirbelungen zwischen den Gitterlamellen entstehen, die zu erhöhten Betriebsgeräuschen führen würden. Die Umlenkung an den Prallkanten führt zu einer effektiven Abscheidung der Bestandteile der Kochdünste, wie Fett und Öl, mittels Fliehkraft aus dem aufgeteilten Luftstrom.

Besonders bevorzugt ist eine Ausführungsform, die vorsieht, dass die Luftleitflächen die Teilluftströme in Hauptströmungsrichtung von radial außen nach radial innen und dann wieder nach radial außen leiten. Die Luftleitflächen lenken die Teilluftströme in Hauptströmungsrichtung des Luftstromes von stromaufwärts des Einströmgitters radial außen zur Hauptströmungsrichtung nach stromabwärts des Einströmgitters radial außen zur Hauptströmungsrichtung des Luftstromes durch das Einströmgitter um. Dabei erstreckt sich die Hauptströmungsrichtung durch das Einströmgitter orthogonal zur ebenen Erstreckung des Einströmgitters. Das sich in einer Ebene erstreckende Einströmgitter wird also flächig von dem Luftstrom angeströmt. Durch die Ansaugung der Teilluftströme von radial außen nach radial innen ins Einströmgitter kann der Bereich vergrößert werden, aus dem die Kochdünste durch die Luftansaugöffnung in Richtung der Mitte der Anströmfläche des Einströmgitters abgesaugt werden. Die Weiterleitung der Teilluftströme im Einströmgitter in radial nach außen gerichteter Richtung ermöglicht einen flachen Aufbau des Dunstabzugs in Hauptströmungsrichtung, da die im Anschluss an das Einströmgitter angeordneten Komponenten des Dunstabzugs seitlich unter dem Einströmgitter positioniert und hier effizient angeströmt werden können.

Eine besonders vorteilhafte Ausführung der Erfindung bezieht sich darauf, dass die Luftleitflächen eine konkav nach außen orientierte erste Krümmung aufweisen, wobei die Prallkanten eine konvex nach außen orientierte zweite Krümmung aufweisen. Der Bereich, aus dem die Kochwrasen durch die Luftansaugöffnung abgesaugt werden, kann durch die konkav nach außen orientierte Krümmung der Luftleitflächen vergrößert werden. Hierdurch wird besonders einfach eine Absaugung der Teilluftströme von radial außen nach radial innen am Einströmgitter erreicht. Die konvex nach außen orientierte zweite Krümmung der Prallkanten sorgt für eine besonders effektive Umlenkung der Teilluftströme an den Prallkannten und so für eine besonders wirksame Abscheidung von Bestandteilen der Kochdünste, wie Fett und Öl, mittels Fliehkraft aus dem Luftstrom. Die erste konkav nach außen orientierte Krümmung lenkt die Teilluftströme effizient auf die konvex nach außen orientierte zweite Krümmung der Prallkanten, die seitlich an den Gitterlamellen gebildet sind. Hierdurch wird eine effektive Umlenkung der Teilluftströme zwischen den Gitterlamellen erreicht, die eine Abscheidung von Fett und Öl mittels Fliehkraft aus den Teilluftströmen bewirkt.

Eine besonders vorteilhafte Ausführung der Erfindung sieht vor, dass der Rahmen außen umlaufend um die innen angeordneten Gitterlamellen angeordnet ist. Über den Rahmen lässt sich das Einströmgitter in die Einströmöffnung einfach einsetzen. Der Rahmen kann einteilig mit den innen angeordneten Gitterlamellen ausgeführt sein oder mehrteilig hierzu, sodass der Rahmen, mit der Lamellenstruktur zusammen montiert, das Einströmgitter bildet. Der mehrteilige Aufbau des Einströmgitters ermöglicht auch, den Rahmen aus einem anderen Material als die Lamellenstruktur zu fertigen. Hierdurch sind sehr einfach auch attraktive optische Akzente realisierbar. Der Rahmen kann auch lichtleitend ausgeführt sein, um das Einströmgitter in der Luftansaugöffnung des Dunstabzugs am Rahmen zu beleuchten.

Eine vorteilhafte Ausführung der Erfindung sieht vor, dass die Gitterlamellen umlaufend um eine zentrale Grifflasche des Einströmgitters herum angeordnet sind. Über die zentrale Grifflasche lässt sich das Einströmgitter einfach manuell in die Luftansaugöffnung einsetzen oder aus dieser entnehmen. Die zentrale Grifflasche dient als einfache Möglichkeit zur Handhabung des Einströmgitters bei der Abreinigung von Fett und Öl, das aus den Kochdünsten abgeschieden wurde. Mit der zentralen Anordnung der Grifflasche im Einströmgitter, bildet diese einen relativ geringen Strömungswiderstand im Einströmgitter, da der zentrale Bereich, insbesondere durch die radial von außen nach innen geleiteten Teilluftströme, ohnehin weniger angeströmt wird, als die darum herum angeordnete Lamellenstruktur des Einströmgitters.

Gegenstand der Erfindung ist auch eine Leitvorrichtung zur Ableitung eines oder mehrerer Bestandteile von Kochdünsten, insbesondere Fett und/oder Öl, aus einem Luftstrom, der eine von oben nach unten gerichtete Hauptströmungsrichtung durch die Leitvorrichtung aufweist, wobei die Leitvorrichtung mindestens eine erste Leitlamelle aufweist, wobei die erste Leitlamelle den Luftstrom in Teilluftströme aufteilt, wobei die erste Leitlamelle sich entlang der Hauptströmungsrichtung erstreckende Fettanhaftflächen bildet, wobei die erste Leitlamelle an ihrer Unterseite eine bogenförmige Ausnehmung aufweist, sodass die Fettanhaftflächen der ersten Leitlamelle außen eine größere Vertikalerstreckung aufweisen als innen, wobei die Bogenform der Ausnehmung dazu ausgebildet ist, an den Fettanhaftflächen anhaftende Bestandteile von Kochdünsten, insbesondere Fett und/oder Öl, in Hauptströmungsrichtung des Luftstromes endseitig der Fettanhaftflächen von innen seitlich nach außen aus dem Luftstrom abzuleiten. Über diese Leitvorrichtung lassen sich einfach abgeschiedene Bestandteile der Kochdünste aus einem Luftstrom seitlich ableiten, sodass diese nicht von dem Luftstrom mitgerissen werden. Die unmittelbare Anordnung der Leitvorrichtung ist also stromabwärts einer Abscheidevorrichtung im Luftstrom von besonderem Vorteil. Mit der Leitlamelle wird der Luftstrom in zwei Teilluftströme aufgeteilt. Um einen möglichst geringen Strömungswiderstand zu bilden, erstrecken sich die Fettanhaftflächen der Leitlamelle in Hauptströmungsrichtung, sodass die Teilluftströme an den Fettanhaftflächen der Leitlamelle vorbei geleitet werden. Die Leitlamelle bildet vorteilhafterweise zwei parallel zueinander ausgerichtete Fettanhaftflächen. An der Unterseite der Leitlamelle ist eine bogenförmige Ausnehmung vorgesehen. Hierdurch erstrecken sich die beidseitig der Leitlamelle angeordneten Fettanhaftflächen an der Seite länger nach unten als in der Mitte der Bogenform. Die Bogenform der Ausnehmung sorgt dafür, dass an den Fettanhaftflächen anhaftende Bestandteilte der Kochdünste, wie Öl und Fett, die vorteilhafterweise bereits zuvor abgeschieden wurden, von seitlich innen nach seitlich außen aus dem Luftstrom abgeleitet werden. Die an den Fettanhaftflächen der Leitlamelle anhaftenden Bestandteile der Kochdünste werden von den entlang der Fettanhaftflächen nach unten geführten Teilluftströmen an die Unterseite der Leitlamelle geleitet. Hier übernimmt die Bogenform die seitliche Führung von Fett und Öl aus dem Luftstrom, da diese Bestandteile der Kochdünste aufgrund der außen größeren Vertikalerstreckung der Fettanhaftflächen von innen seitlich nach außen entlang der Unterseite der Leitlamelle geführt werden. Über die Bogenform der Ausnehmungen an der Leitlamelle werden die Bestandteile der Kochdünste bei ihrer Bewegung an der Leitlamelle entlang auch kontinuierlich nach außen aus dem Luftstrom heraus bewegt. So wird ein Mitreißen bereits abgeschiedener Bestandteile der Kochdünste durch den Luftstrom mittels der Leitvorrichtung wirksam verhindert. Die seitliche Ableitung von Fett und Öl aus dem Luftstrom sorgt für eine effektive Abscheidung und reduzierte Verunreinigung der Leitvorrichtung nachgelagerter Komponenten eines Dunstabzugs.

Besonders vorteilhaft ist eine Ausführungsform der Leitvorrichtung, die vorsieht, dass an der Unterseite der ersten Leitlamelle eine gegen die Hauptströmungsrichtung des Luftstroms in die erste Leitlamelle vertiefte Leitnut ausgebildet ist, wobei die Leitnut dazu ausgebildet ist, an der Unterseite der ersten Leitlamelle anhaftende Bestandteile von Kochdünsten, insbesondere Fett und/oder Öl zu sammeln und in der Leitnut aus dem Luftstrom entlang der Unterseite in seitlicher Richtung abzuleiten. Mit der Leitnut an der Unterseite der Leitlamelle lassen sich die an der Leitlamelle anhaftenden Bestandteile der Kochdünste, wie Fett und Öl, von dem Luftstrom geschützt in seitlicher Richtung ableiten. Die Leitnut an der Unterseite der Leitlamelle bietet den hier anhaftenden Bestandteilen der Kochdünste, wie Fett und Öl, eine vor den Teilluftströmen geschützte Stelle zur Ansammlung. Wenn sich ausreichend Fett und Öl hier an der Unterseite der Leitlamelle gesammelt hat, werden diese Konglomerate aus Fett und Öl in der Leitnut von innen seitlich nach außen aus dem Luftstrom abgeleitet.

Eine vorteilhafte Ausgestaltung der Leitvorrichtung sieht vor, dass die Leitvorrichtung mehrere erste Leitlamellen aufweist, die parallel zueinander und/oder sich zumindest teilweise kreuzend angeordnet sind. Mit den parallel zueinander und/oder sich zumindest teilweise kreuzend angeordneten Leitlamellen wird der Luftstrom in Teilluftströme aufgeteilt. Um einen möglichst geringen Strömungswiderstand zu bilden, erstrecken sich die Fettanhaftflächen der Leitlamellen in Hauptströmungsrichtung, sodass die Teilluftströme an den Fettanhaftflächen der Leitlamellen vorbei geleitet werden. Jede ebene Leitlamelle bildet vorteilhafterweise zwei parallel zueinander ausgerichtete Fettanhaftflächen. An der Unterseite der Leitlamellen sind jeweils bogenförmige Ausnehmungen vorgesehen. Hierdurch erstrecken sich die beidseitig der Leitlamellen angeordnete Fettanhaftflächen an der Seite länger nach unten als in der Mitte der Bogenform. Die Bogenform der Ausnehmungen sorgt dafür, dass an den Fettanhaftflächen anhaftende Bestandteilte der Kochdünste, wie Öl und Fett, die vorteilhafterweise bereits zuvor abgeschieden wurden, von seitlich innen nach seitlich außen aus dem Luftstrom abgeleitet werden. Die an den Fettanhaftflächen der Leitlamellen anhaftenden Bestandteile der Kochdünste werden von den entlang der Fettanhaftflächen nach unten geführten Teilluftströmen an die Unterseiten der Leitlamellen geleitet. Hier übernimmt jeweils die Bogenform die seitliche Führung von Fett und Öl aus dem Luftstrom, da diese Bestandteile der Kochdünste aufgrund der außen größeren Vertikalerstreckung der Fettanhaftflächen von innen seitlich nach außen entlang der Unterseite der Leitlamellen geführt werden. Über die Bogenform der Ausnehmungen an den Leitlamellen werden die Bestandteile der Kochdünste bei ihrer Bewegung an den Leitlamellen entlang auch kontinuierlich nach außen aus dem Luftstrom heraus bewegt. So wird ein Mitreißen bereits abgeschiedener Bestandteile der Kochdünste durch den Luftstrom mittels der Leitvorrichtung wirksam verhindert. Die seitliche Ableitung von Fett und Öl aus dem Luftstrom sorgt für eine effektive Abscheidung und reduzierte Verunreinigung der Leitvorrichtung nachgelagerter Komponenten eines Dunstabzugs. Mit den Leitnuten an den Unterseiten der Leitlamellen lassen sich die an den Leitlamellen anhaftenden Bestandteile der Kochdünste, wie Fett und Öl, von dem Luftstrom geschützt in seitlicher Richtung ableiten. Die Leitnuten an den Unterseiten der Leitlamellen bieten den hier anhaftenden Bestandteilen der Kochdünste, wie Fett und Öl, eine vor den Teilluftströmen geschützte Stelle zur Ansammlung. Wenn sich ausreichend Fett und Öl hier an den Unterseiten der Leitlamellen gesammelt hat, werden diese Konglomerate aus Fett und Öl in der Leitnut von innen seitlich nach außen aus dem Luftstrom abgeleitet.

Gemäß einer bevorzugten Ausgestaltung der Leitvorrichtung ist vorgesehen, dass die ersten Leitlamellen mit ihren bogenförmigen Ausnehmungen eine gemeinsame Gewölbestruktur bilden, wobei die Unterseiten der ersten Leitlamellen eine gewölbeförmige Hüllfläche aufspannen. Über die gewölbeförmige Hüllfläche der Unterseiten können insbesondere bei sich kreuzenden Leitlamellen die Bestandteile der Kochdünste an den Unterseiten über die Kreuzungen an der Hüllfläche von innen seitlich nach außen abgeleitet werden. Mit der gemeinsamen Gewölbestruktur der Ausnehmungen können die Bestandteile der Kochdünste über sich kreuzende Leitlamellen von der höheren Mitte der Gewölbestruktur nach unten und seitlich nach außen abgeleitet werden.

Besonders vorteilhaft ist eine Ausführungsform der Leitvorrichtung, die vorsieht, dass die Leitvorrichtung mindestens eine zweite Leitlamelle zwischen jeweils zwei ersten Leitlamellen aufweist, wobei die zweite Leitlamelle den Luftstrom in Teilluftströme aufteilt, wobei die zweite Leitlamelle weitere sich entlang der Hauptströmungsrichtung des Luftstromes erstreckende Fettanhaftflächen bildet, wobei die zweite Leitlamelle an ihrer Unterseite eine weitere bogenförmige Ausnehmung aufweist, sodass die weiteren Fettanhaftflächen der zweiten Leitlamelle außen eine größere Vertikalerstreckung aufweisen als innen, wobei die Bogenform der weiteren Ausnehmung dazu ausgebildet ist, an den weiteren Fettanhaftflächen anhaftende Bestandteile von Kochdünsten, insbesondere Fett und/oder Öl, in Hauptströmungsrichtung des Luftstromes endseitig der weiteren Fettanhaftflächen von innen seitlich nach außen aus dem Luftstrom abzuleiten. Die zweiten Leitlamellen zwischen den ersten Leitlamellen sorgen für eine zusätzliche Struktur mit weiteren Fettanhaftflächen, um das Fett und Öl der Kochdünste in Hauptströmungsrichtung des Luftstromes von innen seitlich nach außen aus dem Luftstrom abzuleiten.

Eine besonders vorteilhafte Ausführung der Leitvorrichtung sieht vor, dass an der Unterseite der zweiten Leitlamelle eine weitere, gegen die Hauptströmungsrichtung des Luftstroms in die zweite Leitlamelle vertiefte Leitnut ausgebildet ist, wobei die weitere Leitnut dazu ausgebildet ist, an der Unterseite der zweiten Leitlamelle anhaftende Bestandteile von Kochdünsten, insbesondere Fett und/oder Öl zu sammeln und in der weiteren Leitnut aus dem Luftstrom entlang der weiteren Unterseite in seitlicher Richtung abzuleiten. Mit den weiteren Leitnuten an den Unterseiten der zweiten Leitlamellen lassen sich die an den Leitlamellen anhaftenden Bestandteile der Kochdünste, wie Fett und Öl, von dem Luftstrom geschützt in seitlicher Richtung zu den ersten Leitlamellen ableiten. Die weiteren Leitnuten an den Unterseiten der zweiten Leitlamellen bieten den hier anhaftenden Bestandteilen der Kochdünste, wie Fett und Öl, eine vor den Teilluftströmen geschützte Stelle zur Ansammlung. Wenn sich ausreichend Fett und Öl hier an den Unterseiten der zweiten Leitlamellen gesammelt hat, werden diese Konglomerate aus Fett und Öl in den weiteren Leitnuten von innen seitlich nach außen zu den ersten Leitlamellen abgeleitet.

Gemäß einer vorteilhaften Ausgestaltung der Leitvorrichtung ist vorgesehen, dass die Leitvorrichtung mehrere zweite Leitlamellen aufweist, die parallel zueinander und/oder sich zumindest teilweise kreuzend angeordnet sind. Mit den parallel zueinander und/oder sich zumindest teilweise kreuzend angeordneten zweiten Leitlamellen wird der Luftstrom in weitere Teilluftströme aufgeteilt.

Die Leitvorrichtung ist bevorzugt aus Kunststoff hergestellt.

Ferner ist Gegenstand der Erfindung ein Labyrinth-Filter zur Abscheidung eines oder mehrerer Bestandteile von Kochdünsten, insbesondere Fett und/oder Öl, aus einem Luftstrom, wobei der Labyrinth-Filter umfasst:
- eine von dem Luftstrom in einer Hauptströmungsrichtung anströmbare erste Reihe länglicher, parallel und beabstandet voneinander angeordneter erster Luftleitprofile, die an ihrer dem Luftstrom zugewandten Vorderseite konvex gekrümmt sind,
- eine von dem Luftstrom anströmbare zweite Reihe länglicher, parallel und beabstandet voneinander angeordneter zweiter Luftleitprofile stromabwärts der ersten Reihe, wobei die zweiten Luftleitprofile an ihrer dem Luftstrom zugewandten Vorderseite konkav gekrümmt sind und in Richtung quer zu dem Luftstrom seitlich versetzt zu den ersten Luftleitprofilen angeordnet sind,

- eine von dem Luftstrom anströmbare dritte Reihe länglicher, parallel und beabstandet voneinander angeordneter dritter Luftleitprofile stromabwärts der zweiten Reihe, wobei die dritten Luftleitprofile an ihrer dem Luftstrom zugewandten Vorderseite ebenfalls konkav gekrümmt sind und in Richtung quer zu dem Luftstrom seitlich versetzt zu den zweiten Luftleitprofilen angeordnet sind,
- wobei die ersten, zweiten und dritten Luftleitprofile in der Weise zusammenwirken, dass
- die ersten Luftleitprofile den Luftstrom aufteilen und auf die zweiten Luftleitprofile lenken,
- die zweiten Luftleitprofile den aufgeteilten Luftstrom in Richtung auf die Rückseiten der ersten Luftleitprofile umlenken,
- die dritten Luftleitprofile den an den Rückseiten der ersten Luftleitprofile umgelenkten Luftstrom auf die Rückseiten der zweiten Luftleitprofile lenken und den an den Rückseiten der zweiten Luftleitprofile ein weiteres Mal umgelenkten Luftstrom aus dem Labyrinth-Filter heraus leiten. Ein solcher Labyrinth-Filter sorgt für eine besonders wirksame Abscheidung eines oder mehrerer Bestandteile von Kochdünsten, wie Fett und/oder Öl. Der Labyrinth-Filter weist eine vom Luftstrom in einer Hauptströmungsrichtung beaufschlagbare erste Reihe von länglichen, parallel und beabstandet zueinander angeordneten ersten Luftleitprofilen auf, die an ihrer dem Luftstrom zugewandten Vorderseite konvex gekrümmt sind. Die ersten Luftleitprofile teilen den Luftstrom an den konvex gekrümmten Vorderseiten auf. In einem stromabwärtigen Bereich der ersten Reihe ist eine zweite Reihe länglicher, parallel und beabstandet voneinander angeordneter zweiter Luftleitprofile des Labyrinth-Filters angeordnet, welche durch den aufgeteilten Luftstrom angeströmt werden. Die zweiten Luftleitprofile weisen an ihrer dem Luftstrom zugewandten Vorderseite eine konkave Krümmung auf und sind in Richtung quer zu dem Luftstrom seitlich versetzt zu den ersten Luftleitprofilen angeordnet. In stromabwärtiger Richtung folgt auf die zweite Reihe eine dritte Reihe, die aus länglichen, parallel und beabstandet zueinander angeordneten dritten Luftleitprofilen besteht. Diese dritten Luftleitprofile sind so konzipiert, dass sie vom Luftstrom angeströmt werden. Sie sind an ihrer dem Luftstrom zugewandten Vorderseite ebenfalls konkav gekrümmt und in Richtung quer zu dem Luftstrom seitlich versetzt zu den zweiten Luftleitprofilen angeordnet. Die ersten, zweiten und dritten Luftleitprofile wirken so zusammen, dass die ersten Luftleitprofile den aufgeteilten Luftstrom auf die zweiten Luftleitprofile lenken. Anschließend lenken die zweiten Luftleitprofile den aufgeteilten Luftstrom in Richtung auf die Rückseiten der ersten Luftleitprofile um. An den Rückseiten der ersten Luftleitprofile wird der Luftstrom dann erneut umgelenkt. Daraufhin wird der Luftstrom zu den dritten Luftleitprofilen geleitet. Die dritten Luftleitprofile lenken den Luftstrom dann wieder um und zwar auf die Rückseiten der zweiten Luftleitprofile. An den Rückseiten der zweiten Luftleitprofile wird der Luftstrom dann ein weiteres Mal umgelenkt und zwischen den Luftleitprofilen der dritten Reihe aus dem Labyrinth-Filter herausgeleitet. Die vierfache Umlenkung des aufgeteilten Luftstromes an den drei Reihen der Luftleitprofile sorgt für eine wirksame Abscheidung von Fett und Öl aus dem Luftstrom. Weitere Umlenkungen durch weitere Reihen an Leitprofilen sind möglich, allerdings erhöht sich hierdurch der Strömungswiderstand zu Lasten eines noch besseren Abscheidegrads. Besonders die Umlenkung des Luftstromes an den konkav zum aufgeteilten Luftstrom orientierten Vorderseiten der Luftleitprofile aus der zweiten und der dritten Reihe, aber auch die konkav zum aufgeteilten und umgelenkten Luftstrom orientierten Rückseiten der Luftleitprofile aus der ersten Reihe sorgen für eine starke Umlenkung des Luftstromes, sodass gegenüber der Luft schwerere Bestandteile der Kochdünste, wie Fett und Öl an den Luftleitprofilen abgeschieden werden. Die abgeschiedenen Bestandteile der Kochdünste laufen entlang der Luftleitprofile nach unten, sodass sie nicht erneut vom Luftstrom mitgerissen werden. Hierzu erstreckt sich die Hauptströmungsrichtung des Luftstromes durch den Labyrinth-Filter, also von der Anströmung der ersten Reihe der Luftleitprofile bis zum Verlassen der dritten Reihe der Luftleitprofile, in bevorzugt horizontaler Richtung. Der Labyrinth-Filter ist in einer Hauptströmungsrichtung des Luftstroms durch eine erste Reihe länglicher, parallel und beabstandet zueinander angeordneter, erster Luftleitprofile gebildet. In der Hauptströmungsrichtung stromabwärts der ersten Reihe ist eine zweite Reihe länglicher, parallel und beabstandet zueinander angeordneter, zweiter Luftleitprofile des Labyrinth-Filters angeordnet. Die zweiten Luftleitprofile der zweiten Reihe sind zu den ersten Profilen der ersten Reihe in Hauptströmungsrichtung des Luftstromes seitlich versetzt zueinander angeordnet. Die in Hauptströmungsrichtung konvex gekrümmten Vorderseiten der ersten Luftleitprofile leiten den Luftstrom in Teilluftströme aufgeteilt zu der zweiten Reihe der zweiten Luftleitprofile. Die in Hauptströmungsrichtung konkav gekrümmten Vorderseiten der zweiten Luftleitprofile lenken den aufgeteilten Luftstrom in Richtung der ersten Luftleitprofile um, wobei die in Hauptströmungsrichtung konvex gekrümmten Rückseiten der ersten Luftleitprofile den Luftstrom erneut umlenken. In Hauptströmungsrichtung des aufgeteilten Luftstroms verfügt der Labyrinth-Filter über eine dritte Reihe länglicher, parallel und beabstandet zueinander angeordneter, dritter Luftleitprofile, wobei die dritten Luftleitprofile der dritten Reihe zu den zweiten Luftleitprofilen der zweiten Reihe in Hauptströmungsrichtung des aufgeteilten Luftstromes seitlich versetzt zueinander angeordnet sind. Die in Hauptströmungsrichtung des aufgeteilten Luftstromes konkav gekrümmten Vorderseiten der dritten Luftleitprofile lenken den Luftstrom in Richtung der zweiten Luftleitprofile um, wobei die Rückseiten der zweiten Luftleitprofile den Luftstrom erneut umlenken und zwischen den dritten Luftleitprofilen der dritten Reihe hindurch in Hauptströmungsrichtung des aufgeteilten Luftstromes aus dem Labyrinth-Filter leiten.

Besonders bevorzugt ist eine Ausführungsform des Labyrinth-Filters, die vorsieht, dass die einzelnen Reihen der Luftleitprofile jeweils als Stanzbiegeteil aus einem Metallblech geformt sind, wobei die einzelnen Metallbleche zum Labyrinth-Filter miteinander verbunden sind. So kann durch Stanzen und Biegen eines Metallblechs sehr leicht eine einzelne Reihe der Luftleitprofile hergestellt werden. Die Verbindung der einzelnen, entsprechend bearbeiteten Metallbleche zum Labyrinth-Filter erlaubt die einfache Realisierung komplexer Umlenkstrukturen. Die Metallbleche werden bevorzugt zusammengesteckt und weiter bevorzugt aneinander genietet.

Eine besonders vorteilhafte Ausführung des Labyrinth-Filters bezieht sich darauf, dass die Luftleitprofile in dem Labyrinth-Filter in Richtung quer zu ihrer Längserstreckung von dem Luftstrom angeströmt werden. Über diese Anströmung lässt sich der Luftstrom wirksam an den Luftleitprofilen umlenken. Abgeschiedene Bestandteile der Kochdünste können mittels Schwerkraft auch seitlich aus dem Labyrinth-Filter heraus geleitet werden.

Eine besonders vorteilhafte Ausführung des Labyrinth-Filters sieht vor, dass die zweiten und dritten Luftleitprofile jeweils einen von der Hauptströmungsrichtung aus gesehen konkaven, insbesondere C-förmigen Querschnitt aufweisen. Mit der konkaven Krümmung der zweiten und dritten Luftleitprofile in Richtung der Hauptströmung des Luftstromes durch den Labyrinth-Filter kann der Luftstrom einfach umgelenkt werden. Der C-förmige Querschnitt bietet die Möglichkeit eines besonders kompakten Aufbaus.

Eine vorteilhafte Ausführung des Labyrinth-Filters sieht vor, dass die ersten Luftleitprofile jeweils einen von der Hauptströmungsrichtung aus gesehen konvexen, insbesondere C-förmigen Querschnitt aufweisen. Mit der konvexen Krümmung der ersten Luftleitprofile in Richtung der Hauptströmung des Luftstromes durch den Labyrinth-Filter kann der Luftstrom einfach an der Rückseite erneut umgelenkt werden. Der C-förmige Querschnitt bietet eine einfache Möglichkeit eine konkave Rückseite zur erneuten Umlenkung des Luftstromes an den ersten Luftleitprofilen vorzusehen.

Besonders vorteilhaft ist eine Ausführungsform des Labyrinth-Filters, die vorsieht, dass die zweiten Luftleitprofile zu den ersten Luftleitprofilen seitlich, d.h. in Richtung quer zur Hauptströmungsrichtung versetzt angeordnet sind, so dass die zweiten Luftleitprofile Lücken zwischen den nebeneinander aufgereihten ersten Luftleitprofilen überdecken. Durch das Überdecken der zweiten Luftleitprofile an den Lücken der nebeneinander aufgereihten ersten Luftleitprofile kann eine Umlenkung des an den ersten Luftleitprofilen aufgeteilten Luftstroms an den zweiten Luftleitprofilen gewährleistet werden. Der aufgeteilte Luftstrom wird an die Rückseiten der ersten Luftleitprofile umgelenkt.

Eine vorteilhafte Ausgestaltung des Labyrinth-Filters sieht vor, dass die dritten Luftleitprofile zu den zweiten Luftleitprofilen seitlich, d.h. in Richtung quer zur Hauptströmungsrichtung versetzt angeordnet sind, so dass die dritten Luftleitprofile Lücken zwischen den nebeneinander aufgereihten zweiten Luftleitprofilen überdecken. Durch das Überdecken der dritten Luftleitprofile an den Lücken der nebeneinander aufgereihten zweiten Luftleitprofile kann eine Umlenkung des an den zweiten Luftleitprofilen vorbei geleiteten Luftstroms an den dritten Luftleitprofilen gewährleistet werden. Der aufgeteilte Luftstrom wird an den Rückseiten der zweiten Luftleitprofile erneut umgelenkt.

Außerdem ist Gegenstand der Erfindung ein Filtereinsatz zur Filterung eines oder mehrerer Bestandteile von Kochdünsten, insbesondere Fett und/oder Öl, aus einem Luftstrom, wobei der Filtereinsatz einen hohlen Grundkörper, gebildet aus einem wie zuvor und im Folgenden näher beschriebenen Labyrinth-Filter oder mehreren zuvor und im Folgenden näher beschriebenen Labyrinth-Filtern aufweist, wobei der Labyrinth-Filter über den hohlen Grundkörper des Filtereinsatzes vom Luftstrom angeströmt wird und von dem Luftstrom zur Außenseite des Filtereinsatzes durchströmt wird oder wobei die Labyrinth-Filter über den hohlen Grundkörper des Filtereinsatzes vom Luftstrom angeströmt werden und von dem Luftstrom zur Außenseite des Filtereinsatzes durchströmt werden. Der Filtereinsatz zur Filterung eines oder mehrerer Bestandteile von Kochdünsten, insbesondere Fett und/oder Öl, aus einem Luftstrom, ist in einem Dunstabzug einsetzbar. Der Filtereinsatz ist für den Eintritt des Luftstroms als einseitig offener Hohlkörper ausgebildet, dessen Wandung zumindest teilweise aus einem von dem Luftstrom durchströmbaren Labyrinth-Filter gebildet ist. Bei diesem Labyrinth-Filter kann es sich um den wie zuvor und im Folgenden näher beschriebenen Labyrinth-Filter handeln. Der erfindungsgemäße Filtereinsatz hat also einen hohlen Grundkörper, der aus einem wie zuvor und im Folgenden näher beschriebenen Labyrinth-Filter oder mehreren solchen Labyrinth-Filtern gebildet sein kann. Dieser Labyrinth-Filter wird gleichmäßig über den hohlen Grundkörper des Filtereinsatzes vom Luftstrom angeströmt. Der Luftstrom durchströmt den Filtereinsatz dann von Innen durch die Labyrinth-Filter zur Außenseite hin. Die Anströmung des Labyrinth-Filters bzw. der Labyrinth-Filter erfolgt über den hohlen Grundkörper des Filtereinsatzes durch den Luftstrom. Die Durchströmung des Labyrinth-Filters bzw. der Labyrinth-Filter erfolgt in Richtung zur Außenseite des Filtereinsatzes. Der Filtereinsatz eignet sich besonders für den Einsatz in einer Luftansaugöffnung eines Dunstabzugs, da der hohle Grundkörper hier einfach einseitig angeströmt werden kann. Die Labyrinth-Filter als seitliche Wandung des Grundkörpers bieten eine große Anströmfläche, die über den hohlen Grundkörper gleichmäßig angeströmt werden kann.

Gemäß einer bevorzugten Ausgestaltung des Filtereinsatzes ist vorgesehen, dass der Labyrinth-Filter als Körperwandung das Innere des Grundkörpers entlang seines Außenumfangs vollständig umschließt oder dass die Labyrinth-Filter als Körperwandung das Innere des Grundkörpers entlang seines Außenumfangs seitlich umschließen. Wenn der Labyrinth-Filter als Körperwandung das Innere des Grundkörpers entlang seines Außenumfangs vollständig umschließt, kann die gesamte Seitenwand des Grundkörpers als Anströmfläche genutzt werden. Sofern die Labyrinth-Filter als Körperwandung den Innenraum des Grundkörpers entlang seines Außenumfangs umschließen, kann der Filtereinsatz aus mehreren Labyrinth-Filtern mit einer besonders einfachen Herstellungsmethode gefertigt werden, da sich die Labyrinth-Filter als Gleichteile ausführen und leicht aneinander montieren lassen. Der hohle Grundkörper kann an allen Seiten von dem/den Labyrinth-Filter/n als Körperwandung umschlossen sein, wo dieser nicht für das Einströmen des Luftstroms offen ist, d.h. insbesondere an allen Seiten bis auf eine, an der der Grundkörper für das Einströmen offen ist.

Besonders vorteilhaft ist eine Ausführungsform des Filtereinsatzes, die vorsieht, dass der Grundkörper an seiner Oberseite eine Lufteintrittsöffnung aufweist und an seiner Unterseite vorzugsweise geschlossen ist, wobei der Labyrinth-Filter als Körperwandung das Innere des Grundkörpers entlang seines seitlichen Außenumfangs vollständig umschließt, oder wobei die Labyrinth-Filter als Körperwandung das Innere des Grundkörpers entlang seines seitlichen Außenumfangs umschließen. Mit der Lufteintrittsöffnung an der Oberseite des Grundkörpers, ist eine Anströmung des Filtereinsatzes von oben nach unten möglich. Dies erleichtert insbesondere den Einsatz in einem Kochfeldabzug. Eine geschlossene Unterseite des Grundkörpers kann als Fettauffangschale dienen. Die geschlossene Unterseite des Grundkörpers kann aus Kunststoff hergestellt sein. Der Labyrinth-Filter kann als Körperwandung das Innere des Grundkörpers entlang seines seitlichen Außenumfangs vollständig umschließen, sodass eine möglichst große Anströmfläche gegeben ist. Die Labyrinth-Filter können als Körperwandung das Innere des Grundkörpers entlang seines seitlichen Außenumfangs auch gemeinsam umschließen.

Eine besonders vorteilhafte Ausführung des Filtereinsatzes sieht vor, dass der Grundkörper quaderförmig ist. Mit dem quaderförmigen Aufbau ist eine einfache Herstellung des Filtereinsatzes möglich. Die Anordnung des Filtereinsatzes in einem Dunstabzug ist durch diese Form auch besonders platzsparend möglich. Mit dieser Form bilden sich einfach vier Seitenwandungen, die als Labyrinth-Filter ausgeführt sein können. Während der Boden des Quaders als Fettauffangschale dienen kann, ist die Oberseite bevorzugt als Lufteintrittsöffnung ausgeführt. Auch der Boden kann optional als Labyrinth-Filter ausgeführt sein. Das Auffangen von Fett oder anderen Flüssigkeiten sollte dann anderweitig bewerkstelligt werden, z.B. durch eine von dem Filtereinsatz separate Auffangschale oder -wanne.

Gemäß einer vorteilhaften Ausgestaltung des Filtereinsatzes ist vorgesehen, dass der hohle Grundkörper mit einem wie zuvor und im Folgenden näher beschriebenen Einströmgitter von oben abgedeckt ist. Mit der Abdeckung der Oberseite des hohlen Grundkörpers durch das zuvor und im Folgenden näher beschriebene Einströmgitter kann auch an der Oberseite des Filtereinsatzes bereits Fett und Öl aus dem Luftstrom abgeschieden werden. Das Einströmgitter an der Oberseite des Filtereinsatzes dient also als Vorabscheidung, bevor weitere Bestandteile der Kochdünste von dem Labyrinth-Filter oder den Labyrinth-Filtern des Filtereinsatzes abgeschieden werden. Der im Einströmgitter vorgereinigte Luftstrom strömt also durch den hohlen Grundkörper des Filtereinsatzes, bevor die im Luftstrom noch verbliebenen Bestandteile der Kochdünste, wie Fett und Öl, in dem Labyrinth-Filter oder den Labyrinth-Filtern des Filtereinsatzes abgeschieden werden. Mit der Abdeckung der Oberseite durch das Einströmgitter wird der hohle Grundkörper auch vor hereinfallenden Gegenständen geschützt. Die Abdeckung des hohlen Grundkörpers durch das Einströmgitter ermöglicht die kompakte Anordnung und optimale Anströmung von den Luftstrom umlenkenden Abscheidestrukturen in dem Filtereinsatz. Neben den Labyrinth-Filtern dient auch das Einströmgitter der Abscheidung von Bestandteilen der Kochdünste wie Fett und/oder Öl.

Besonders bevorzugt ist eine Ausführungsform des Filtereinsatzes, die vorsieht, dass der Luftstrom durch den Filtereinsatz eine erste, von oben nach unten gerichtete Hauptströmungsrichtung durch das Einströmgitter aufweist und stromabwärts des Einströmgitters im hohlen Grundkörper seitlich umgelenkt wird, wobei der Luftstrom in weiteren Hauptströmungsrichtungen des aufgeteilten Luftstroms horizontal durch den oder die Labyrinth-Filter geleitet wird. Die seitliche Umlenkung des Luftstroms ermöglicht einen besonders flachen Aufbau des Filtereinsatzes. Mit der von oben nach unten gerichteten Hauptströmungsrichtung durch das Einströmgitter eignet sich der Filtereinsatz besonders für die Verwendung in Kochfeldabzügen. Die seitliche Umlenkung ermöglicht einen flachen Aufbau des Dunstabzugs bei der Verwendung des Filtereinsatzes. Mit der Umlenkung des Luftstromes in dem hohlen Grundkörper können die Labyrinth-Filter des Filtereinsatzes sehr gleichmäßig auf einer großen Anströmfläche angeströmt werden.

Eine besonders vorteilhafte Ausführung des Filtereinsatzes bezieht sich darauf, dass in dem hohlen Grundkörper unter dem Einströmgitter eine wie zuvor und im Folgenden näher beschriebene Leitvorrichtung eingesetzt ist, welche am Einströmgitter abgeschiedene Bestandteile von Kochdünsten, insbesondere Fett und/oder Öl, in Hauptströmungsrichtung des Luftstromes durch das Einströmgitter und die Leitvorrichtung von innen seitlich nach außen zu dem Labyrinth-Filter oder zu den Labyrinth-Filtern ableitet. Die Anordnung der Leitvorrichtung unter Einströmgitter bietet eine hervorragende Möglichkeit, die vom Einströmgitter abgeschiedenen Bestandteile der Kochdünste, wie Fett und Öl, seitlich aus dem Luftstrom zu leiten. Die seitliche Ableitung der vom Einströmgitter abgeschiedenen Bestandteile über die darunter angeordnete Leitvorrichtung stellt sicher, dass die bereits abgeschiedenen Bestandteile nicht wieder von dem Luftstrom mitgerissen werden. Die im Einströmgitter abgeschiedenen Bestandteile der Kochdünste werden von der Leitvorrichtung aus dem Luftstrom seitlich zu den Labyrinth-Filtern abgeleitet und vorteilhafterweise übergeben. Die von der Leitvorrichtung zu den Labyrinth-Filtern geleiteten Bestandteile der Kochdünste laufen von der Leitvorrichtung an den Luftleitprofilen der Labyrinth-Filter herunter. An der Unterseite des Filtereinsatzes sammeln sich diese Bestandteile bevorzugt in einer Fettauffangschale des Filtereinsatzes oder des Dunstabzugs. Die Leitlamellen der Leitvorrichtung sind vorteilhalfterweise so angeordnet, dass diese die Gitterlamellen des Einströmgitters verlängern. So können die vom Einströmgitter abgeschiedenen Bestandteile der Kochdünste leicht von den Luftleitflächen auf die Fettanhaftflächen der Leitvorrichtung übergehen. Die Fettanhaftflächen der Leitvorrichtung verlängern so die Luftleitflächen der Gitterlamellen. Zur Reinigung lässt sich das Einströmgitter vorteilhalfterweise von der Leitvorrichtung lösen.

Zudem ist Gegenstand der Erfindung ein Dunstabzug zum Abzug von Kochdünsten an einem Kochfeld mittels eines Luftstromes, mit
- einem Abzugsgehäuse, das wenigstens eine Luftansaugöffnung und wenigstens einen Luftauslass für den Luftstrom aufweist,
- wenigstens einem in dem Abzugsgehäuse angeordneten Lüfter zur Erzeugung des Luftstromes, und
- wenigstens einem in dem Abzugsgehäuse in dem Luftstrom zwischen Luftansaugöffnung und Lüfter angeordneten, wie zuvor und im Folgenden näher beschriebenen Filtereinsatz, wobei der Luftstrom in dem Abzugsgehäuse von der Luftansaugöffnung über den Filtereinsatz zu dem Lüfter geführt und von dem Lüfter über den Luftauslass aus dem Abzugsgehäuse geblasen wird. Der Dunstabzug kann als Dunstabzugshaube oder als Kochfeldabzug ausgeführt sein. Der Filtereinsatz ist bevorzugt über die Luftansaugöffnung in den Dunstabzug einsetzbar. Das Einströmgitter des Filtereinsatzes deckt dann die Luftansaugöffnung des Dunstabzugs ab. Der Filtereinsatz kann zur Reinigung auch aus dem Dunstabzug über die Luftansaugöffnung entnommen werden.

Gegenstand der Erfindung ist auch ein Kombinationsgerät mit einem Kochfeld und einem wie zuvor und im Folgenden näher beschriebenen Dunstabzug, wobei der Dunstabzug als Kochfeldabzug zum Abzug von Kochdünsten von über dem Kochfeld in nach unten weisender Richtung integriert ist, wobei der Filtereinsatz in die in dem Kochfeld ausgebildete Luftansaugöffnung des Dunstabzugs einsetzbar und aus dieser entnehmbar ist. Der Kochfeldabzug unter dem Kochfeld kann mit dem erfindungsgemäßen Filtereinsatz besonders flach ausgeführt sein. Außerdem bietet der Filtereinsatz eine hervorragende Abscheidung von Bestandteilen der Kochdünste auf besonders engem Raum, was bei Kochfeldabzügen zu einer besonders geringen Bauhöhe führt. Die Bauhöhe des erfindungsgemäßen Kombinationsgeräts liegt bevorzugt unter 30 cm, weiter bevorzugt unter 25 cm, weiter bevorzugt unter 20 cm, weiter bevorzugt unter 15 cm.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es zeigen:
- Figur 1: erfindungsgemäßes Kombinationsgerät,
- Figur 2: erfindungsgemäßer Dunstabzug mit Kochfeld,
- Figur 3: Ansicht von vorne auf Kombinationsgerät,
- Figur 4: Ansicht von unten auf Kombinationsgerät,
- Figur 5: Draufsicht auf Kochfeld mit erfindungsgemäßem Einströmgitter,
- Figur 6: Explosionsdarstellung zu erfindungsgemäßem Filtereinsatz,
- Figur 7: erfindungsgemäßes Einströmgitter,
- Figur 8: Explosionsdarstellung zu Einströmgitter,
- Figur 9: perspektivische Schnittansicht durch Einströmgitter,
- Figur 10: Schnittansicht durch Einströmgitter,
- Figur 11: erfindungsgemäße Leitvorrichtung,
- Figur 12: Detailansicht auf Leitvorrichtung,
- Figur 13: weitere Ansicht auf Leitvorrichtung,
- Figur 14: weitere Leitvorrichtung,
- Figur 15: erfindungsgemäßer Labyrinth-Filter,
- Figur 16: Explosionsdarstellung zu Labyrinth-Filter,
- Figur 17: Schnittansicht durch Labyrinth-Filter,
- Figur 18: perspektivische Schnittansicht durch den erfindungsgemäßen Filtereinsatz,
- Figur 19: weitere Explosionsdarstellung zu Filtereinsatz,
- Figur 20: weitere Darstellung zu Filtereinsatz,
- Figur 21: weiterer Filtereinsatz,
- Figur 22: weitere Explosionsdarstellung zu Filtereinsatz,
- Figur 23: Schnittansicht durch Filtereinsatz in Kombinationsgerät, und
- Figur 24: weitere Schnittansicht durch Filtereinsatz in Kombinationsgerät,

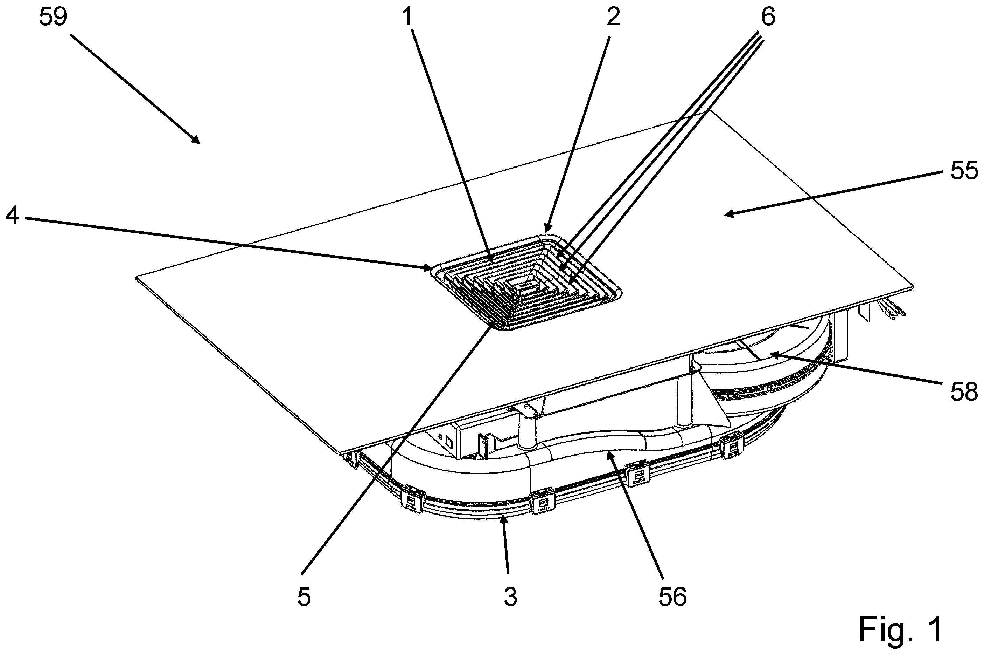

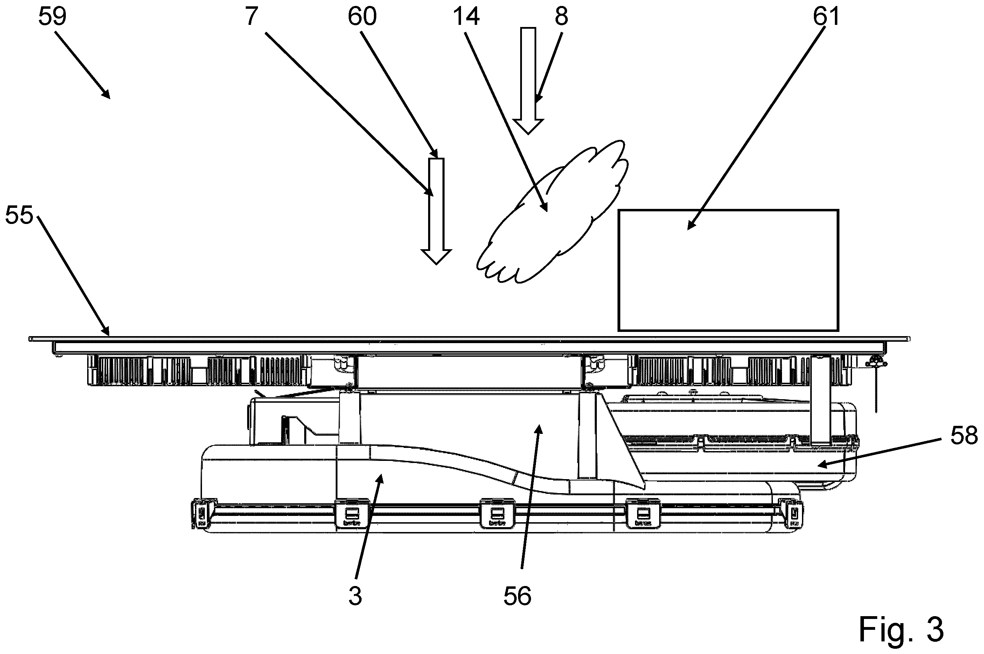

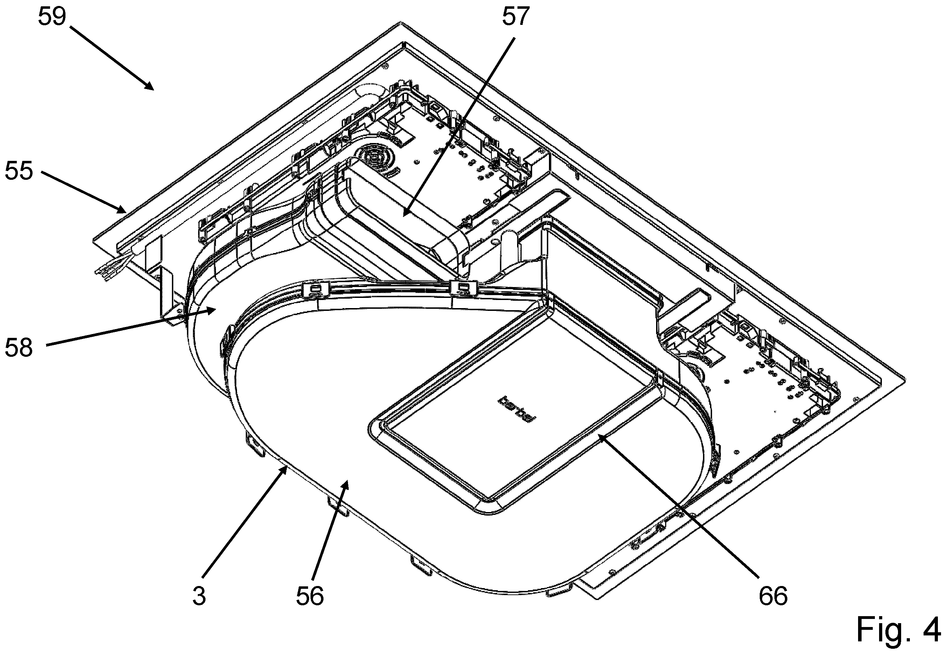

In der Figur 1 mit dem Bezugszeichen 59 bezeichnet ist ein erfindungsgemäßes Kombinationsgerät dargestellt. Dieses Kombinationsgerät 59 verfügt über ein Kochfeld 55, welches bevorzugt mehrere Kochstellen zum Erwärmen und Kochen von Speisen in einem Kochgeschirr 61 (Fig. 3) aufweist. Das Kochfeld 55 ist bevorzugt durch eine Glaskeramik abgedeckt, die eine Aussparung aufweist. In dieser Aussparung ist eine Luftansaugöffnung 2 eines Dunstabzugs 3 des Kombinationsgerätes 59 angeordnet. Der Dunstabzug 3 des Kombinationsgeräts 59 ist also als Kochfeldabzug zum Abzug von Kochdünsten 14 (Fig. 3) von über dem Kochfeld 55 in nach unten weisender Richtung 59 (Fig. 3) ausgebildet. Der Dunstabzug 3 zieht die Kochdünste 14 (Fig. 3) an dem Kochfeld 55 mittels eines Luftstromes 8 (Fig. 3) ab, der von über dem Kochfeld 55 nach unten zur Luftansaugöffnung 2 gerichtet ist. Das Abzugsgehäuse 56 des Dunstabzugs 3 weist eine Luftansaugöffnung 2 auf, die bevorzugt mittig im Kochfeld 55 angeordnet ist, um den Luftstrom 8 mit den Kochdünsten 14 (Fig. 3) einzusaugen. Außerdem weist das Abzugsgehäuse 56 einen Luftauslass 57 (Fig. 4) auf, über den der Luftstrom 8 (Fig. 3) wieder aus dem Abzugsgehäuse 56 geleitet wird. In dem Abzugsgehäuse 56 ist ein Lüfter 58 angeordnet, dessen Lüftergehäuse, als Teil des Abzugsgehäuses 56, in Figur 1 zu sehen ist. Der Lüfter 58 dient zur Erzeugung des Luftstromes 8 (Fig. 3) zum Abzug der Kochdünste 14 (Fig. 3).

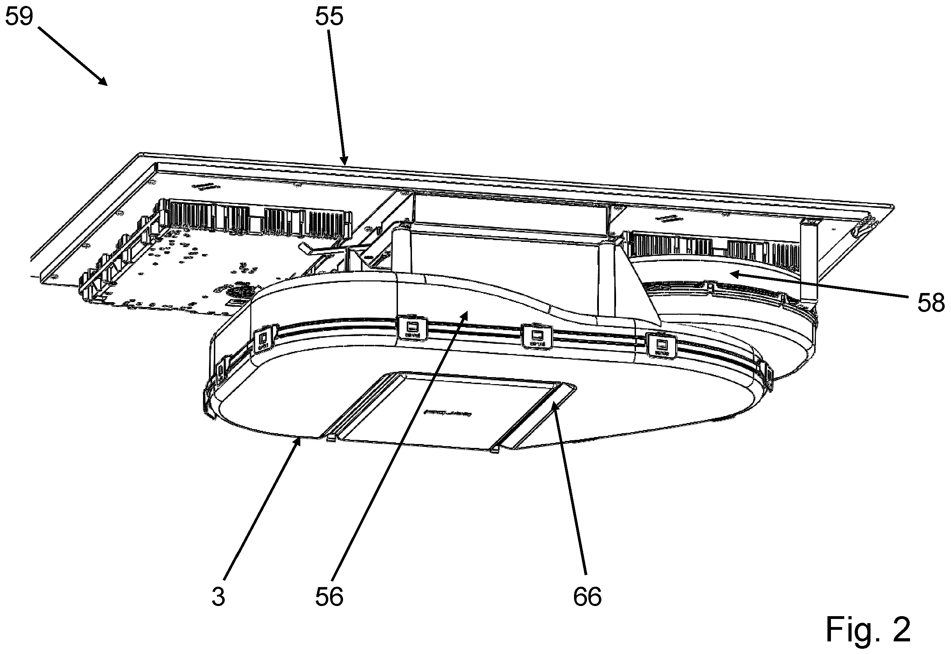

In Figur 2 ist das Kombinationsgerät 59 gemäß Figur 1 von schräg unten gezeigt. Erkennbar ist der erfindungsgemäße Dunstabzug 3, der im Ausführungsbeispiel als Kochfeldabzug unter dem Kochfeld 55 ausgeführt ist.

Die Figur 3 zeigt das Kombinationsgerät 59 gemäß der Figuren 1 und 2 in einer Ansicht von vorne. Erkennbar ist hier auch, dass der vom Lüfter 58 erzeugte Luftstrom 8 die Kochdünste 14 von über dem Kochfeld 55 in nach unten weisender Richtung 60 in das Abzugsgehäuses 56 absaugt.

Eine Unteransicht auf das Kombinationsgerät 59 gemäß der Figuren 1 bis 3 ist in Figur 4 dargestellt. Hier ist der Luftauslass 57 erkennbar, der an das Gehäuse des Lüfters 58 anschließt.

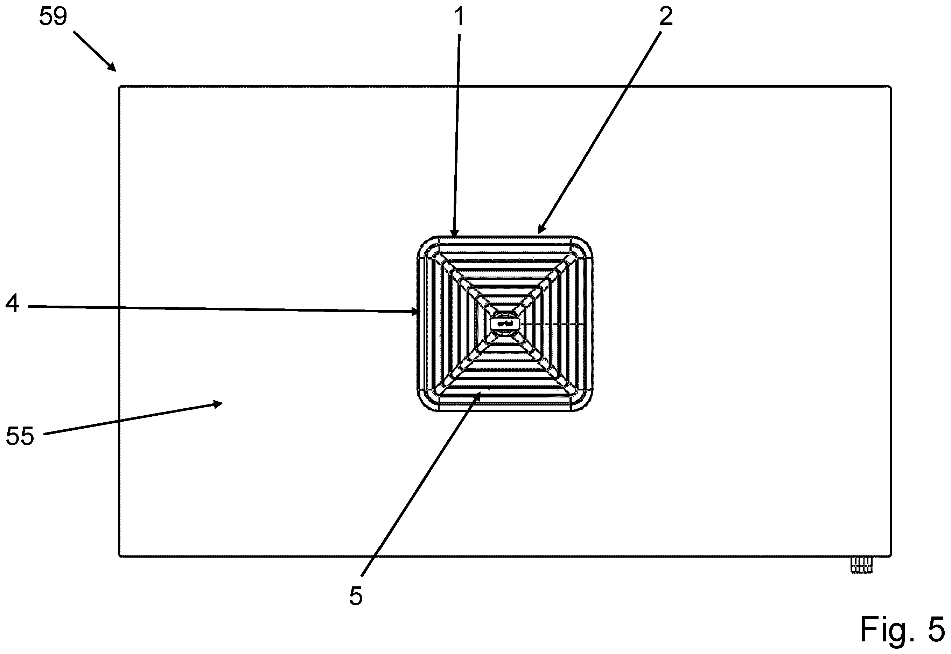

Die Figur 5 zeigt eine Draufsicht auf das Kochfeld 55 gemäß der Figuren 1 bis 4, wobei hier auch das erfindungsgemäße Einströmgitter 1 in Draufsicht erkennbar ist, das in die Luftansaugöffnung 2 des Dunstabzugs 3 (Fig. 1) eingesetzt ist. Das erfindungsgemäße Einströmgitter 1 wird im Folgenden noch näher erläutert.

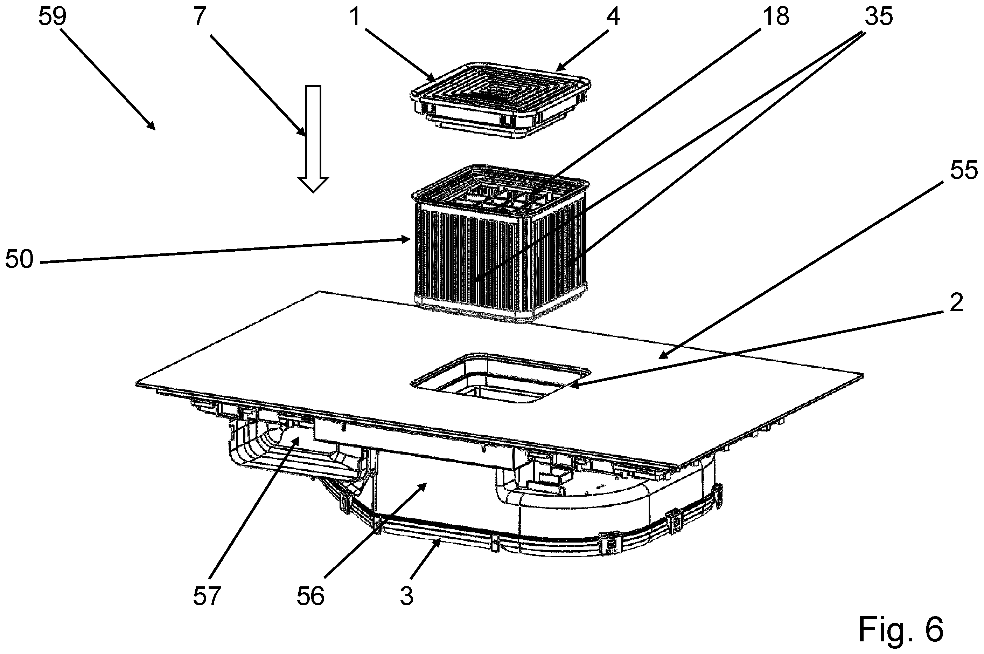

Neben dem Einströmgitter 1 ist auch ein Filtereinsatz 50, welcher in Figur 6 zu sehen ist, in die Luftansaugöffnung 2 des Dunstabzugs 3 einsetzbar. Der Filtereinsatz 50 dient zur Filterung eines oder mehrere Bestandteile von Kochdünsten 14 (Fig. 3), insbesondere Fett und/oder Öl, aus dem Luftstrom 8 (Fig. 3). Der Filtereinsatz 50 wird in dem Abzugsgehäuse 56 in dem Luftstrom 8 (Fig. 3) zwischen der Luftansaugöffnung 2 und Lüfter 58 (Fig. 4) angeordnet. Er ist in die in dem Kochfeld 55 ausgebildete Luftansaugöffnung 2 des Dunstabzugs 3 einsetzbar und aus dieser zur Reinigung entnehmbar ist. Auch der Filtereinsatz 50 wird im Folgenden noch näher erläutert. Er verfügt über mehrere erfindungsgemäße Labyrinth-Filter 35, die im Folgenden noch näher erläutert werden. An dem Filtereinsatz 50 ist auch eine erfindungsgemäße Leitvorrichtung 18 vorgesehen, die im Folgenden ebenfalls noch näher erläutert wird. Die Leitvorrichtung 18 dient zum Ableiten eines oder mehrerer Bestandteile der Kochdünste 14 (Fig. 3) aus dem Luftstrom 8 (Fig. 3). Der Luftstrom 8 (Fig. 3) wird in dem Abzugsgehäuse 56 von der Luftansaugöffnung 2 über den Filtereinsatz 50 zu dem Lüfter 58 (Fig. 1) geführt und von dem Lüfter 58 (Fig. 2) über den Luftauslass 57(Fig. 4) aus dem Abzugsgehäuse 56 geblasen.

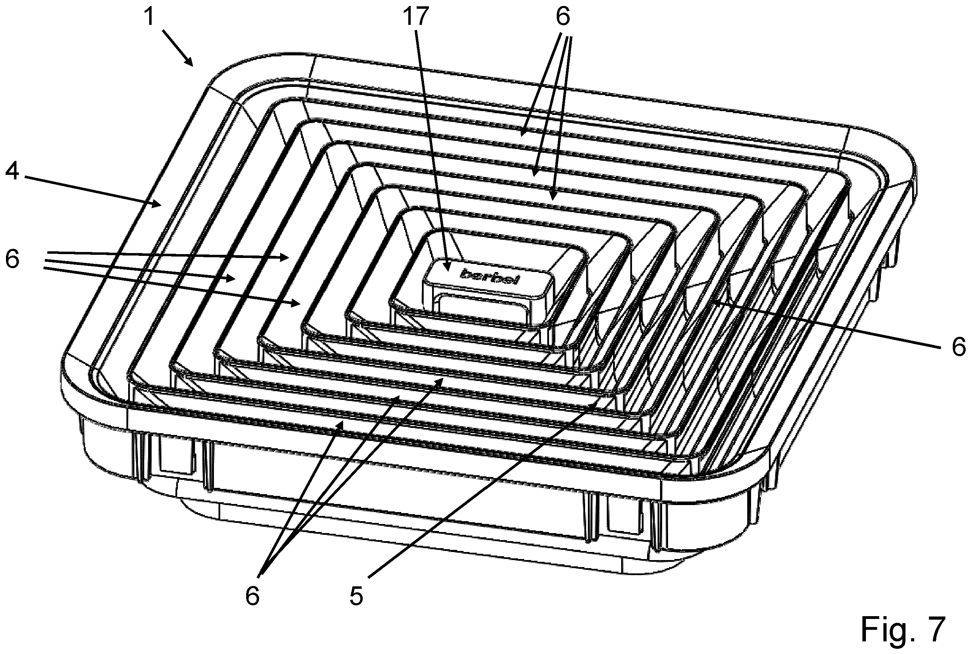

Die Figur 7 zeigt eine Einzelansicht auf das erfindungsgemäße Einströmgitter 1, welches bereits in dem Figuren 1, 5 und 6 gezeigt ist. Das Einströmgitter 1 kann in die Luftansaugöffnung 2 (Fig. 6) des Dunstabzugs 3 (Fig. 6) eingesetzt werden. Es verfügt über einen Rahmen 4, und über eine am Rahmen 4 gebildeten Lamellenstruktur 5. Der Rahmen 4 ist außen umlaufend um die innen angeordneten Gitterlamellen 6 angeordnet.

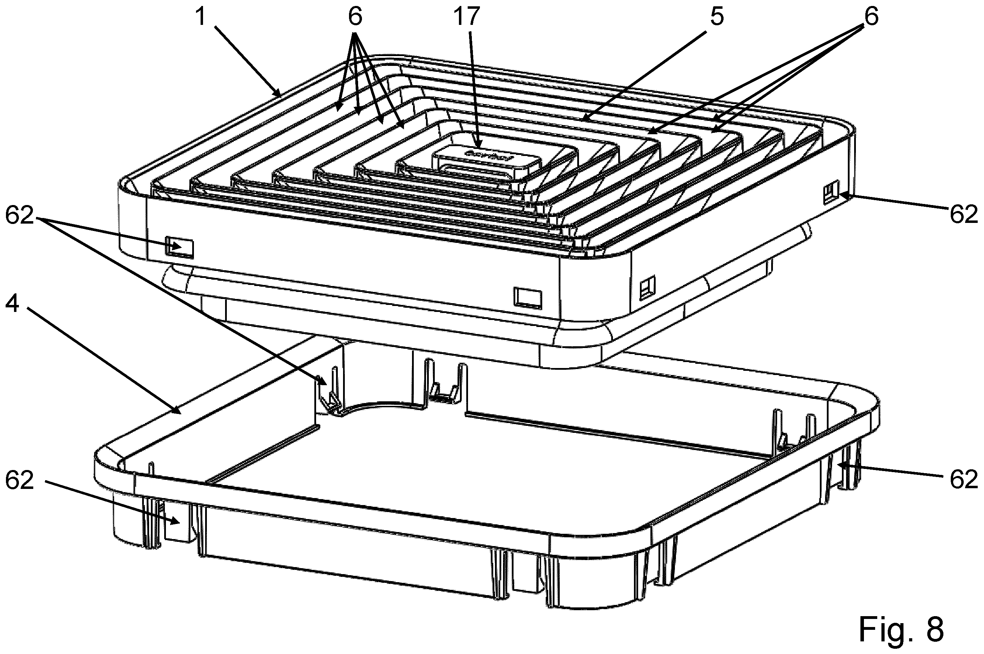

Wie aus Figur 8 hervorgeht, können Rahmen 4 und Lamellenstruktur 5 mehrteilig aufgebaut sein. Im hier gezeigten Ausführungsbeispiel wird der Rahmen 4 an der Lamellenstruktur 5 über Rastverbindungen 62 eingeclipst. So können der Rahmen 4 und die Lamellenstruktur 5 einfach aus unterschiedlichen Materialien gefertigt sein. Wahlweise können der Rahmen 4 und die Lamellenstruktur 5 aus einem Stück gefertigt werden. Die Gitterlamellen 6 der Lamellenstruktur 5 sind vorteilhafterweise umlaufend um eine zentrale Grifflasche 17 des Einströmgitters 1 herum angeordnet, an welcher das Einströmgitter 1 leicht ergriffen und manuell bewegt werden kann.

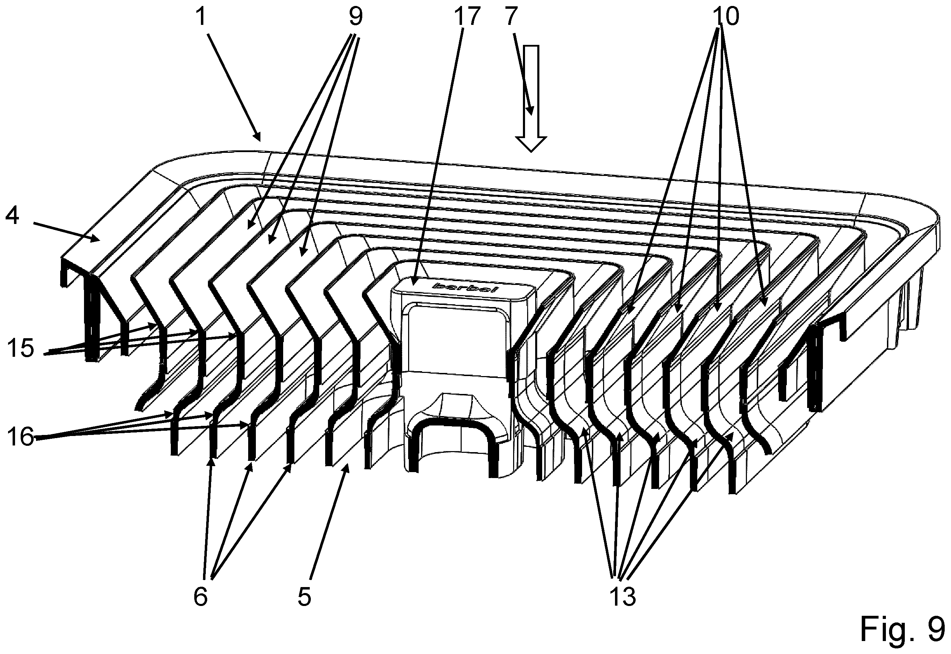

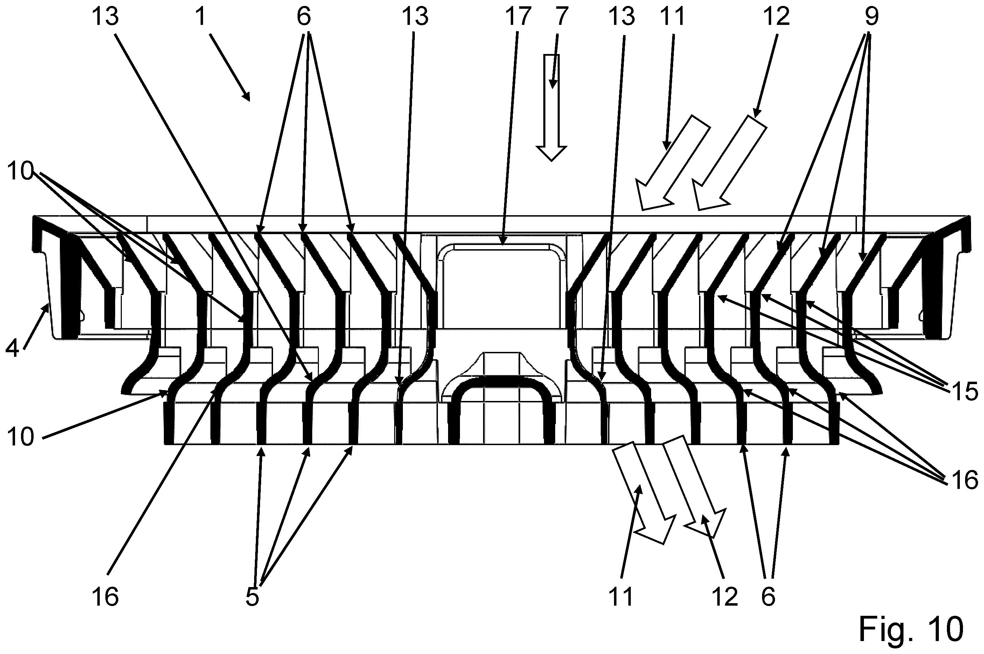

In Figur 9 ist eine Schnittansicht durch das Einströmgitter 1 der Figuren 7 und 8 gezeigt. Hier ist gut zu erkennen, dass die Lamellenstruktur 5 mehrere zueinander beabstandet angeordnete Gitterlamellen 6 aufweist. Diese Gitterlamellen 6 sind mit dem Rahmen 4 verbunden. Durch die Gitterlamellen 6 werden jeweils Luftleitflächen 9, 10 gebildet, die sich entlang einer Hauptströmungsrichtung 7 des Luftstromes 8 (Fig. 3) erstrecken. Der Luftstrom 8 (Fig. 3) bewegt sich im Ausführungsbeispiel also von oben nach unten durch das sich horizontal erstreckende Einströmgitter 1. Hierbei wird der Luftstrom 8 an den Gitterlamellen 6 in Teilluftströme 11, 12 aufgeteilt, die in der Schnittansicht gemäß Figur 10 angedeutet sind.

Wie in der Schnittansicht durch das Einströmgitter gemäß Figur 10 gut zu erkennen ist, lenken die Luftleitflächen 9, 10 die Teilluftströme 11, 12 des aufgeteilten Luftstroms 8 (Fig. 3) jeweils in Richtung einer durch die Gitterlamellen 6 gebildeten Prallkante 13. An diesen Prallkanten 13 werden die Teilluftströme 11, 12 umgelenkt und von den Luftleitflächen 10, 11 weiter in Hauptströmungsrichtung 7 des Luftstromes 8 durch das Einströmgitter 1 an den Gitterlamellen 6 vorbeigeführt. Hierdurch lassen sich Bestandteile der Kochdünste 14 (Fig. 3), insbesondere Fett und/oder Öl, bereits in dem Einströmgitter 1 abscheiden, sodass das Einströmgitter 1 neben dem Schutz der Luftansaugöffnung 2 (Fig. 1) eine zusätzliche Funktion erfüllt. Das Einströmgitter 1 ist vorteilhafterweise als Fliehkraftabscheider zur Abscheidung eines oder mehrerer Bestandteile von Kochdünsten 14 (Fig. 10) ausgebildet. So werden die Bestandteile der Kochdünste 14 (Fig. 10), insbesondere Fett und Öl, mittels Fliehkraft aus dem umgelenkten Luftstrom 8 abgeschieden. Die abgeschiedenen Bestandteile der Kochdünste 14 (Fig. 3) lagern sich an den Prallkanten 13 der Gitterlamellen 6 und/oder an den Luftleitfläche 10, 11 der Gitterlamellen 6 ab. Wie in Figur 10 zu erkennen ist, werden die Teilluftströme 11, 12 von den Luftleitflächen 10, 11 in Hauptströmungsrichtung 7 von radial außen nach radial innen und dann wieder nach radial außen geleitet. Das sich bevorzugt horizontal erstreckende Einströmgitter 1 wird so flächig von oben nach unten durch den Luftstrom 8 durchströmt. Eine Vergrößerung des Bereichs, aus dem die Kochdünste 14 (Fig. 3) durch die Luftansaugöffnung 2 (Fig. 6) in Richtung der Mitte der Anströmfläche des Einströmgitters 1 abgesaugt werden, kann durch die Ansaugung der Teilluftströme 11, 12 von radial außen nach radial innen ins Einströmgitter 1 erzielt werden. Hierzu weisen die Luftleitflächen 9, 10 der Gitterlamellen 6 eine konkav nach außen orientierte erste Krümmung 15 auf. Die Weiterleitung der Teilluftströme 11, 12 im Einströmgitter 1 in radial nach außen gerichteter Richtung erlaubt einen flachen Aufbau des Dunstabzugs 3 (Fig. 3) in Hauptströmungsrichtung 7, da die im Anschluss an das Einströmgitter 1 angeordneten Komponenten des Dunstabzugs 3 (Fig. 3) seitlich unter dem Einströmgitter 1 positioniert und hier effizient angeströmt werden können. Die Prallkanten 13 weisen eine konvex nach außen orientierte zweite Krümmung 16 auf. Die zweite, konvex nach außen gerichtete Krümmung 16 der Prallkanten 13 bewirkt eine besonders effektive Umlenkung der Teilluftströme 11, 12 an den Prallkanten 13 und damit eine besonders effektive Abscheidung von Wrasenbestandteilen wie Fett und Öl aus dem Luftstrom 8 (Fig. 3) durch Zentrifugalkraft. Über die erste, konkav nach außen gerichtete Krümmung 15 werden die Teilluftströme 11, 12 effizient auf die zweite, konvex nach außen gerichtete Krümmung 16 der Prallkanten 13 gelenkt. Hierdurch wird eine effektive Umlenkung der Teilluftströme 11, 12 zwischen den Gitterlamellen 6 erreicht, die eine Fliehkraftabscheidung von Fett und Öl aus den Teilluftströmen 11, 12 bewirkt.

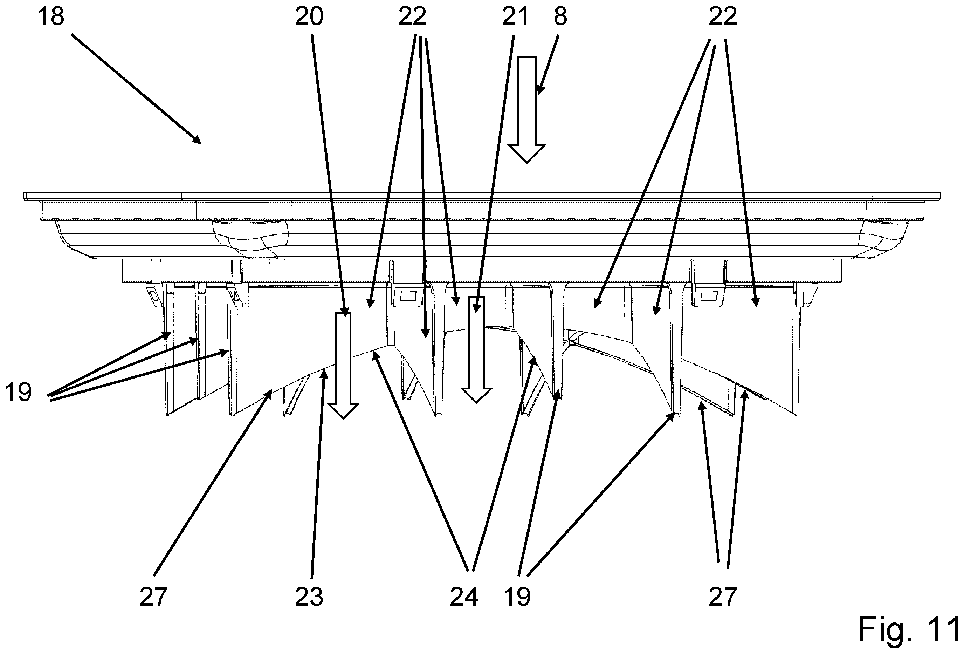

Die Figur 11 zeigt eine erfindungsgemäße Leitvorrichtung 18 von der Seite. Die Leitvorrichtung 18 dient zur Ableitung eines oder mehrerer Bestandteile von Kochdünsten 14 (Fig. 3), insbesondere Fett und/oder Öl, aus einem Luftstrom 8, der eine von oben nach unten gerichtete Hauptströmungsrichtung 7 durch die Leitvorrichtung 18 aufweist. Diese Leitvorrichtung 18 wird bevorzugt unter dem erfindungsgemäßen Einströmgitter 1 (Fig. 10) eingesetzt, um am Einströmgitter 1 (Fig. 10) abgeschiedene Bestandteile der Kochdünste 14 (Fig. 3) abzuleiten. Die Leitvorrichtung 18 weist mehrere erste Leitlamellen 19 auf, wobei die ersten Leitlamellen 19 den Luftstrom 8 jeweils in Teilluftströme 20, 21 aufteilen. Die ersten Leitlamellen 19 bilden jeweils sich entlang der Hauptströmungsrichtung 7 erstreckende Fettanhaftflächen 22 aus. An ihrer Unterseite 23 verfügen die ersten Leitlamellen 19 jeweils über eine bogenförmige Ausnehmung 24. Hierdurch haben die Fettanhaftflächen 22 der ersten Leitlamellen 19 außen eine größere Vertikalerstreckung als innen. Die Bogenform der Ausnehmung 24 ist so ausgestaltet, das an den Fettanhaftflächen 22 anhaftende Bestandteile der Kochdünste 14 (Fig. 3), insbesondere Fett und/oder Öl, in Hauptströmungsrichtung 7 (Fig. 6) des Luftstromes 8 endseitig der Fettanhaftflächen 22 von innen seitlich nach außen aus dem Luftstrom 8 abgeleitet werden. Über die Leitvorrichtung 18 lassen sich sehr einfach abgeschiedene Bestandteile der Kochdünste 14 (Fig. 3) aus einem Luftstrom 8 seitlich ableiten. So werden diese Bestandteile nicht mehr von dem Luftstrom 8 mitgerissen. Die unmittelbare Anordnung der Leitvorrichtung 18 ist also stromabwärts des erfindungsgemäßen Einströmgitters 1 (Fig. 1) im Luftstrom 8 von besonderem Vorteil.

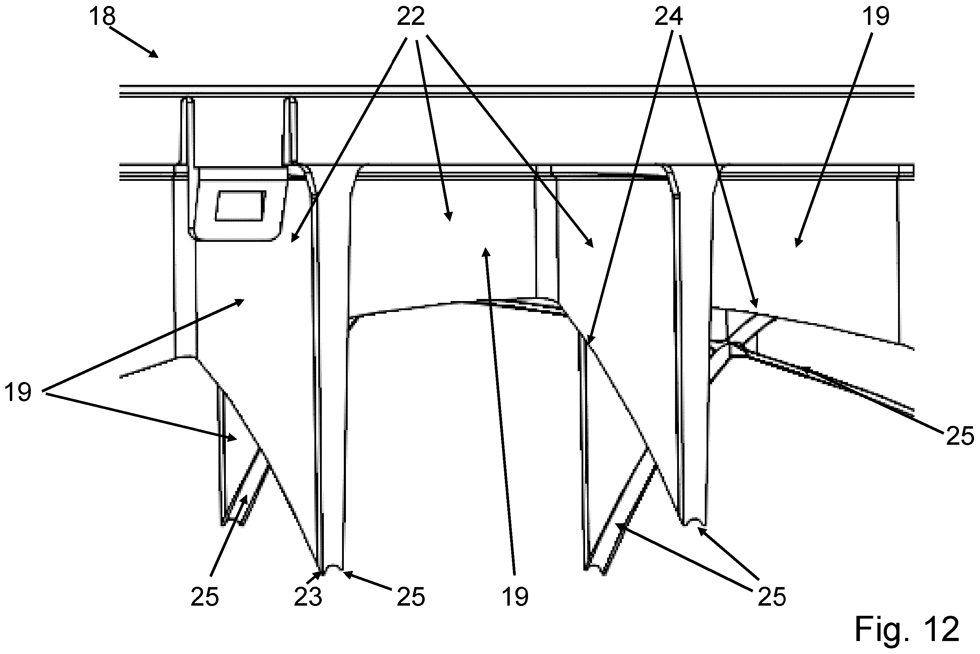

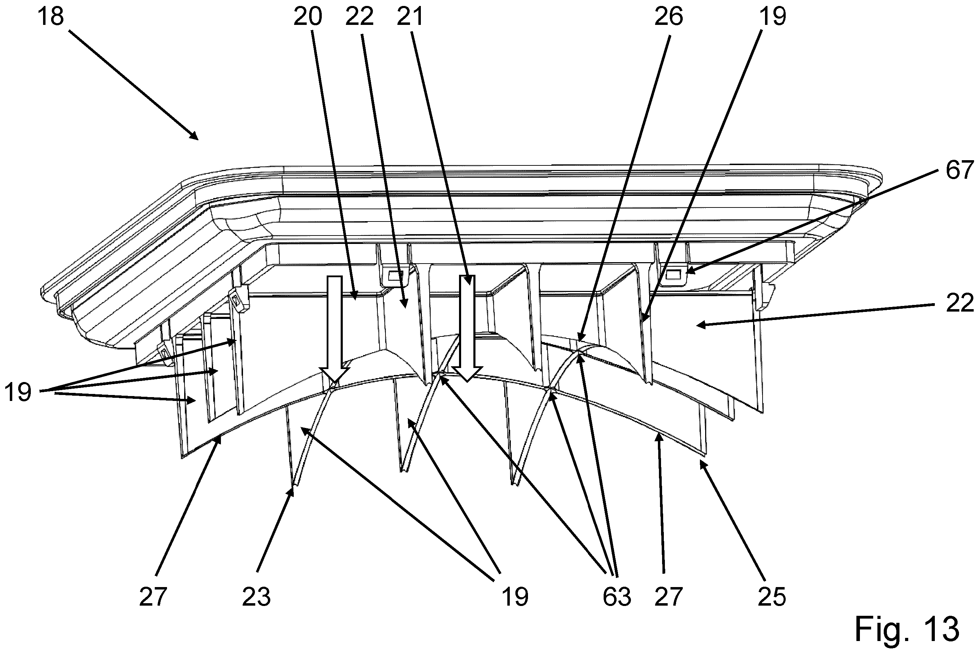

Die Figur 12 ist eine ausschnittsweise dargestellte Detailansicht zu der Figur 11. Hier sind einige Details der Leitvorrichtung 18 gemäß Figur 11 besser zu erkennen. So sind hier die an den Unterseiten 23 der ersten Leitlamellen 19 gegen die Hauptströmungsrichtung 7 des Luftstroms 8 in die ersten Leitlamellen 19 vertieften Leitnuten 25 zu sehen. Die Leitnuten 25 dienen dazu, an den Unterseiten 23 der ersten Leitlamellen 19 anhaftende Bestandteile von Kochdünsten 14, insbesondere Fett und/oder Öl zu sammeln und in den Leitnuten 25 aus dem Luftstrom 8 entlang der Unterseiten 23 in seitlicher Richtung abzuleiten. Die Leitnuten 25 an den Unterseiten 23 der ersten Leitlamellen 19 bietet den hier anhaftenden Bestandteilen der Kochwrasen, wie Fett und Öl, einen von den Teilluftströmen 20, 21 (Fig. 11) abgeschirmten Bereich zur Ansammlung. Wenn sich hier an den Unterseiten 23 der ersten Leitlamellen 19 genügend Fett und Öl angesammelt hat, werden diese Fett- und Ölkonglomerate in den Leitnuten 25 von innen seitlich nach außen vom Luftstrom 8 weggeführt. In Figur 13 ist eine weitere Ansicht auf die Leitvorrichtung 18 gemäß der Figuren 11 und 12 gezeigt. Hier ist zu sehen, dass die Leitvorrichtung 18 mehrere erste Leitlamellen 19 aufweist, die teilweise parallel zueinander und sich zumindest teilweise kreuzend angeordnet sind. Die ersten Leitlamellen 19 spannen so mit ihren bogenförmigen Ausnehmungen 24 eine gemeinsame Gewölbestruktur 26 auf, wobei die Unterseiten 23 der ersten Leitlamellen 19 eine gewölbeförmige Hüllfläche 27 bilden. Diese Hüllfläche 27 ist zur Durchströmung der Teilluftströme 20, 21 unterbrochen. Durch die gewölbte Hüllfläche 27 der Unterseiten 23 können insbesondere bei sich kreuzenden Leitlamellen 19 die Bestandteile der Kochwrasen an den Unterseiten 23 über die Kreuzungen 63 der Hüllfläche 27 von innen seitlich nach außen abgeführt werden. Durch die gemeinsame Wölbung der Ausnehmungen 24 können die Bestandteile der Kochdämpfe über sich kreuzende Leitlamellen 19 von der oberen Mitte der Wölbung nach unten und seitlich nach außen abgeleitet werden.

In Figur 13 ist eine weitere Leitvorrichtung 18 gezeigt. Diese Leitvorrichtung 18 entspricht vom Aufbau her der Leitvorrichtung 18 gemäß der Figuren 11 bis 13.

Allerdings verfügt die Leitvorrichtung 18 gemäß Figur 13 zusätzlich über zweite Leitlamellen 28 zwischen jeweils zwei ersten Leitlamellen 19. Diese zweiten Leitlamellen 28 teilen die Teilluftströme 20, 21 (Fig. 13) des Luftstroms 8 (Fig. 11) in weitere Teilluftströme 29, 30 auf. Die zweiten Leitlamellen 28 bilden weitere sich entlang der Hauptströmungsrichtung 7 (Fig. 6) des Luftstromes 8 (Fig. 11) erstreckende Fettanhaftflächen 31. Die zweiten Leitlamellen 28 weisen an ihren Unterseiten 32 jeweils weitere bogenförmige Ausnehmungen 33 auf. Hierdurch haben die weiteren Fettanhaftflächen 31 der zweiten Leitlamellen 28 ebenfalls außen eine größere Vertikalerstreckung als innen. Auch die Bogenformen der weiteren Ausnehmungen 33 sind dazu ausgebildet, an den weiteren Fettanhaftflächen anhaftende Bestandteile von Kochdünsten 14 (Fig. 3), insbesondere Fett und/oder Öl, in Hauptströmungsrichtung 7 des Luftstromes 8 endseitig der weiteren Fettanhaftflächen 31 von innen seitlich nach außen aus dem Luftstrom 8 abzuleiten. An den Unterseiten 32 der zweiten Leitlamellen 28 sind weitere, gegen die Hauptströmungsrichtung 7 (Fig. 6) des Luftstroms 8 (Fig. 11) in die zweite Leitlamellen 28 vertiefte Leitnuten 34 vorgesehen. Wie auch die Leitnuten 25 der ersten Leitlamellen 19 dienen die weiteren Leitnuten 34 dazu, an den Unterseiten 32 der zweiten Leitlamellen 28 anhaftende Bestandteile von Kochdünsten 14 (Fig. 3), insbesondere Fett und/oder Öl zu sammeln und in den weiteren Leitnuten 34 aus dem Luftstrom 8 entlang der weiteren Unterseiten 32 in seitlicher Richtung abzuleiten. Die weiteren Leitnuten 34 an den Unterseiten 32 der zweiten Leitlamellen 28 bieten den hier anhaftenden Bestandteilen der Kochwrasen, wie Fett und Öl, einen von den Teilluftströmen 29, 30 abgeschirmten Bereich zur Ansammlung. Wenn sich hier an den Unterseiten 32 der zweiten Leitlamellen 28 genügend Fett und Öl angesammelt hat, werden diese Fett- und Ölkonglomerate in den weiteren Leitnuten 34 von innen seitlich nach außen zu den ersten Leitlamellen 19 abgeführt. An den Fettanhaftflächen 22 der ersten Leitlamellen 19 laufen diese Konglomerate hinunter zu den Unterseiten 23 der ersten Leitlamellen 19 und werden dort, wie bereits beschrieben, seitlich aus dem Luftstrom 8 (Fig. 11) abgeleitet. Die Leitvorrichtung 18 weist vorteilhafterweise mehrere zweite Leitlamellen 28 auf, die parallel zueinander angeordnet sind. Diese zweiten Leitlamellen 28 können aber auch sich zumindest teilweise kreuzend angeordnet sein.

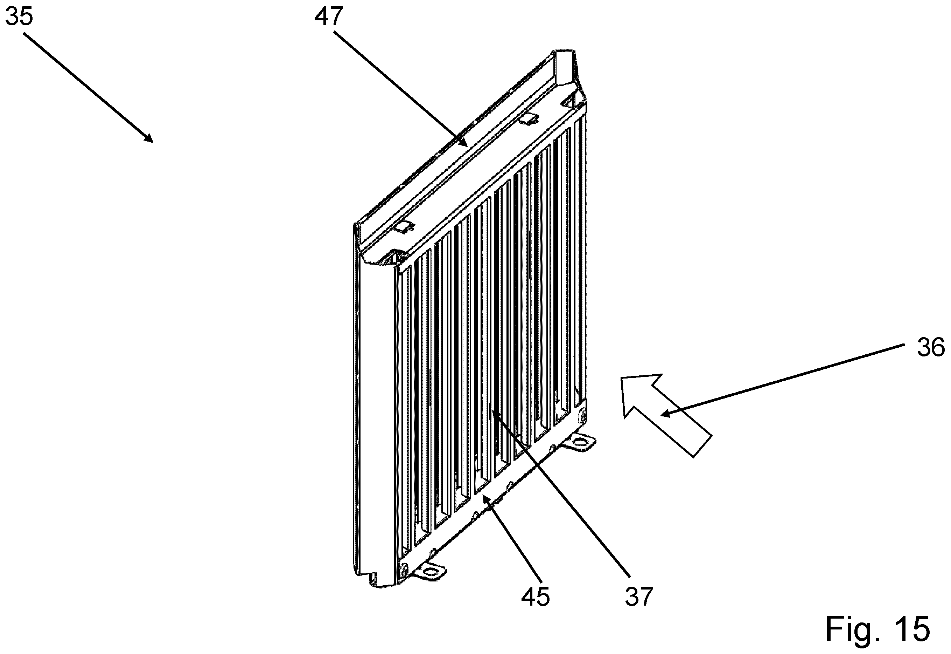

Die Figur 15 zeigt einen erfindungsgemäßen Labyrinth-Filter 35 zur Abscheidung eines oder mehrerer Bestandteile von Kochdünsten 14 (Fig. 3), insbesondere Fett und/oder Öl, aus einem Luftstrom 8 (Fig. 3). Der Labyrinth-Filter 35 hat eine von dem Luftstrom 8 (Fig. 3) in einer Hauptströmungsrichtung 36 anströmbare erste Reihe länglicher, parallel und beabstandet voneinander angeordneter erster Luftleitprofile 37.

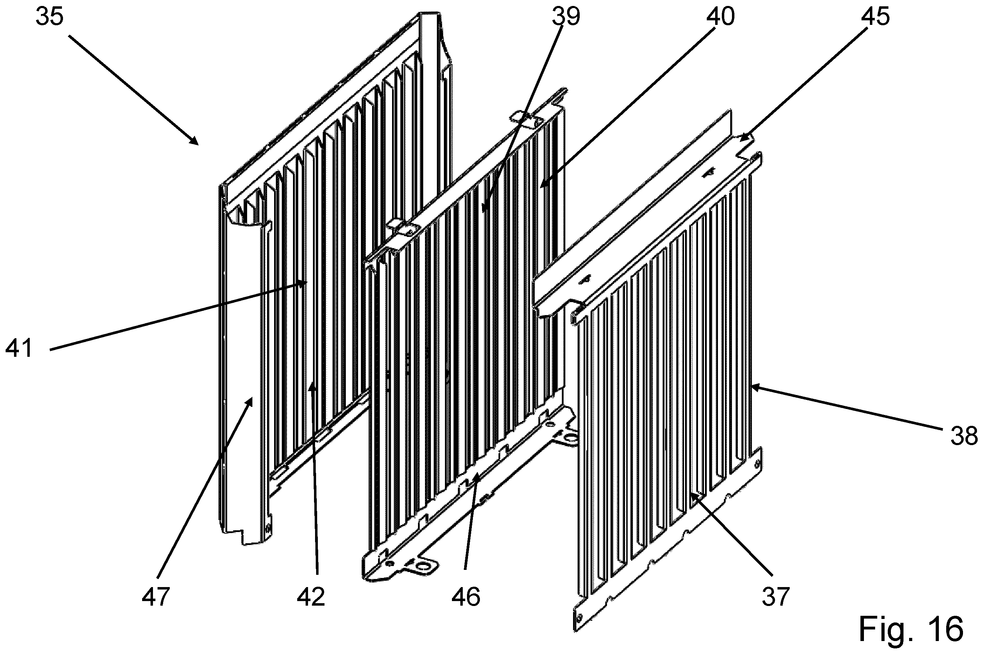

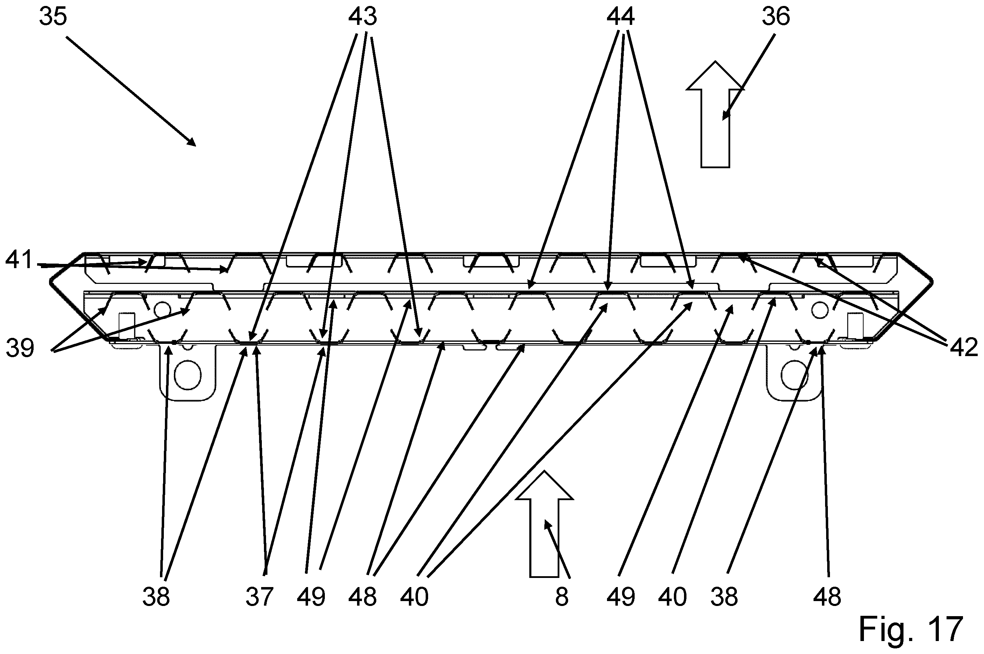

In Figur 16 ist der Labyrinth-Filter 35 gemäß Figur 15 in einer Explosionsdarstellung gezeigt. Hier ist stromabwärts der ersten Reihe eine zweite Reihe von länglichen zweiten Luftleitprofilen 39 zu sehen, die parallel und mit Abstand zueinander angeordnet sind und von der Luftströmung 8 (Fig. 17) angeströmt werden. Weiterhin ist stromabwärts der zweiten Reihe eine dritte Reihe von länglichen, parallel und beabstandet zueinander angeordneten dritten Luftleitprofilen 41 vorgesehen, die von dem Luftstrom 8 (Fig. 17) beaufschlagbar sind. Der Labyrinth-Filter 35 ist vorteilhafterweise durch mehrere Metallbleche 45, 46, 47 gefertigt. Die einzelnen Reihen der Luftleitprofile 37, 39, 41 sind jeweils als Stanzbiegeteil aus einem Metallblech 45, 46, 47 geformt. Dies macht die Herstellung des Labyrinth-Filters besonders einfach. Die einzelnen Metallbleche 45, 46, 47 werden nach dem Stanzen und Biegen zum Labyrinth-Filter 35 miteinander verbunden. Bevorzugt werden die gestanzten und gebogenen Metallbleche 45, 46, 47 ineinandergesteckt und vernietet. Die Luftleitprofile 37, 39, 41 werden in dem Labyrinth-Filter 35 in Richtung quer zu ihrer Längserstreckung von dem Luftstrom 8 (Fig. 17) angeströmt werden. Durch diese Anströmung kann der Luftstrom 8 (Fig. 17) an den Luftleitprofilen 37, 39, 41 wirkungsvoll umgelenkt werden. Die hierdurch abgeschiedenen Bestandteile der Kochdämpfe können auch durch Schwerkraft nach unten aus dem Labyrinth-Filter 35 heraus geleitet werden. Die genaue Wirkweise des Labyrinth-Filters 35 bei der Abscheidung von Bestandteile von Kochdünsten 14 (Fig. 3) soll im Folgenden noch näher anhand von Figur 17 erklärt werden.

Die Figur 17 zeigt eine Schnittansicht durch den Labyrinth-Filter 35 gemäß Figur 15 entlang der Hauptströmungsrichtung 36 des Luftstromes 8 durch den Labyrinth-Filter 35. Hier ist zu erkennen, dass die ersten Luftleitprofile 37 an ihrer dem Luftstrom 8 zugewandten Vorderseite 38 konvex gekrümmt sind. Hierdurch teilen die ersten Luftleitprofile 37 den Luftstrom 8 an den konvex gekrümmten Vorderseiten 38 auf. Die dem Luftstrom 8 zugewandten Vorderseiten 40 der zweiten Luftleitprofile 39 sind hingegen konkav gekrümmt und in Querrichtung zum Luftstrom 8 seitlich versetzt zu den ersten Luftleitprofilen 37 angeordnet. Die dritten Luftleitprofile 41 sind an ihrer dem Luftstrom 8 zugewandten Vorderseite 42 ebenfalls konkav gekrümmt und in Richtung quer zu dem Luftstrom 8 seitlich versetzt zu den zweiten Luftleitprofilen 39 angeordnet. Die zweiten und dritten Luftleitprofile 39, 41 weisen jeweils einen von der Hauptströmungsrichtung 36 aus gesehenen konkaven, insbesondere C-förmigen Querschnitt auf. Die ersten Luftleitprofile 37 weisen hingegen jeweils einen von der Hauptströmungsrichtung 36 aus gesehenen konvexen, insbesondere C-förmigen Querschnitt auf. Die ersten, zweiten und dritten Luftleitprofile 37, 39, 41 wirken so zusammen, dass die ersten Luftleitprofile 37 den geteilten Luftstrom 8 auf die zweiten Luftleitprofile 39 lenken. Die zweiten Luftleitprofile 37 sind, wie in Figur 17 zu erkennen, zu den ersten Luftleitprofilen 37 seitlich, d.h. in Richtung quer zur Hauptströmungsrichtung 36 versetzt angeordnet. Die zweiten Luftleitprofile 39 überdecken so die Lücken 48 zwischen den nebeneinander aufgereihten ersten Luftleitprofilen 37. Die zweiten Luftleitprofile 39 lenken den geteilten Luftstrom 8 zu den Rückseiten 43 der ersten Luftleitprofile 37. An den Rückseiten 43 der ersten Luftleitprofile 37 wird der Luftstrom 8 dann erneut, also wieder in Hauptströmungsrichtung 36, umgelenkt. Hierbei wird der Luftstrom 8 auf die dritten Luftleitprofile 41 gelenkt. Die dritten Luftleitprofile 37 sind zu den zweiten Luftleitprofilen 39 seitlich, d.h. in Richtung quer zur Hauptströmungsrichtung 36 versetzt angeordnet. Die dritten Luftleitprofile 41 überdecken so die Lücken 49 zwischen den nebeneinander aufgereihten zweiten Luftleitprofilen 39. Die dritten Luftleitprofile 41 lenken den Luftstrom 8 dann wiederum entgegen der Hauptströmungsrichtung 36 auf die Rückseiten 44 der zweiten Luftleitprofile 39 um. An den Rückseiten 44 der zweiten Luftleitprofile 39 wird der Luftstrom 8 erneut in Hauptströmungsrichtung 36 umgelenkt und zwischen den Luftleitprofilen 41 der dritten Reihe aus dem Labyrinth-Filter 35 geführt. Durch die vierfache Umlenkung des geteilten Luftstromes 8 an den drei Luftleitprofilreihen 37, 39, 41 wird eine effektive Abscheidung von Fetten und Ölen aus dem Luftstrom 8 erreicht.

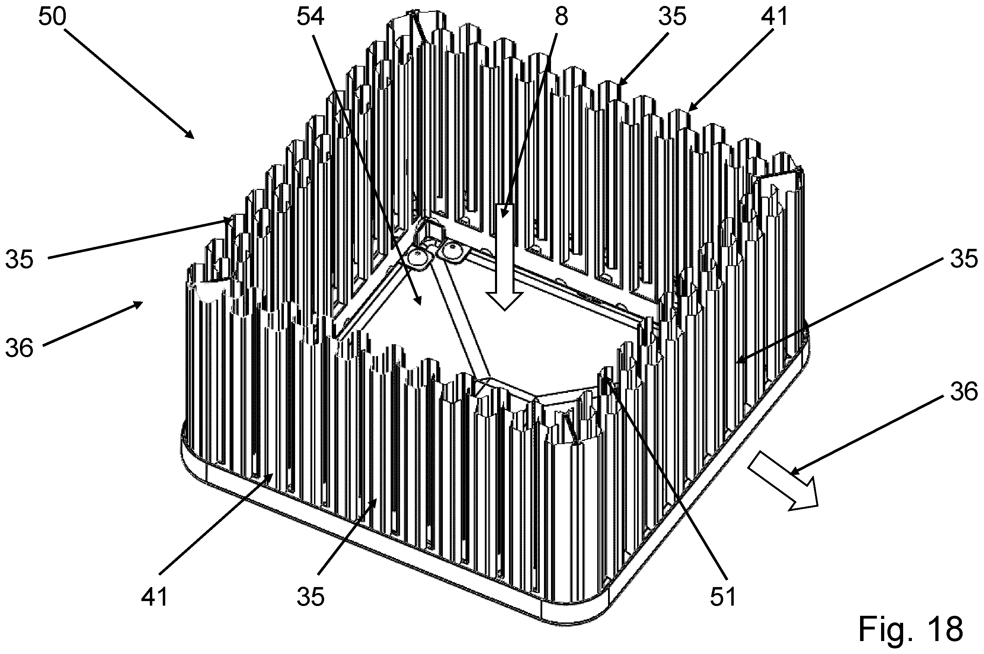

Die Figur 18 zeigt eine perspektivische Schnittansicht durch einen erfindungsgemäßen Filtereinsatz 50. Der Filtereinsatz 50 dient zur Filterung eines oder mehrerer Bestandteile von Kochdünsten 14 (Fig. 3), insbesondere Fett und/oder Öl, aus einem Luftstrom 8 (Fig. 3). Hierzu ist der Filtereinsatz 50 aus einen hohlen Grundkörper 51 gebildet, der aus mehreren wie zuvor und im Folgenden näher beschrieben Labyrinth-Filtern 35 als Wandungen geformt ist. Der Grundkörper 51 des Filtereinsatzes 50 ist bevorzugt quaderförmig aufgebaut und umfasst vier Labyrinth-Filter 35. Dieser Aufbau lässt sich besonders einfach herstellen. Die Labyrinth-Filter 35 umschließen als Körperwandung das Innere des Grundkörpers 51 entlang seines seitlichen Außenumfangs. Hierdurch ist die gesamte seitliche Außenfläche des Filtereinsatzes zum Filtern von Kochdünsten zu nutzen. Damit kann eine große Filterfläche bereitgestellt werden, welche den Druckverlust durch den Filtereinsatz 50 minimiert, bei gleichbleibender Filterleistung. Die Labyrinth-Filter 35 werden über den hohlen Grundkörper 51 des Filtereinsatzes 50 von innen vom Luftstrom 8 angeströmt. Dann strömt der Luftstrom 8 aus dem hohlen Grundkörper 51 zur Außenseite des Filtereinsatzes 50 durch die Labyrinth-Filter 35, wie zuvor beschrieben.

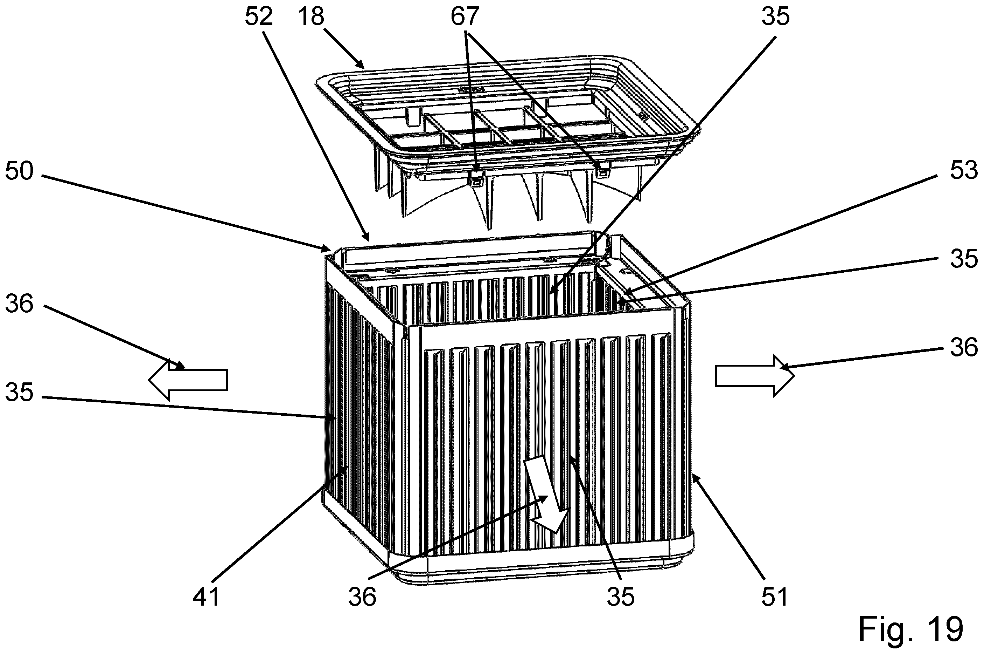

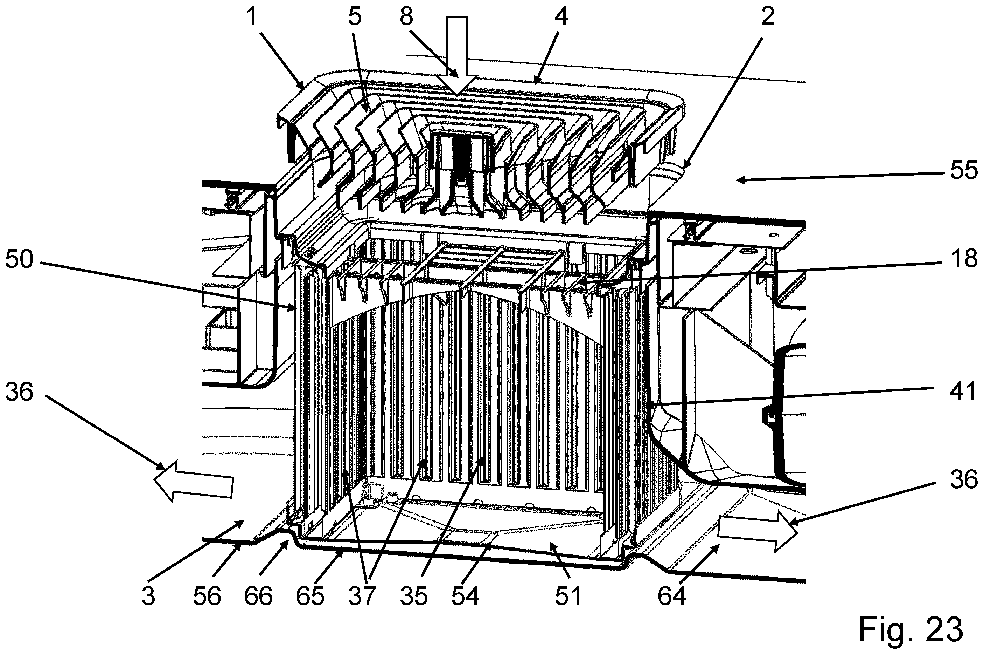

In Figur 19 ist der gesamte Filtereinsatz 50 zu sehen, der in Figur 18 zur Erläuterung nur geschnitten dargestellt ist. An seiner Oberseite 52 weist der Grundkörper 51 des Filtereinsatzes 50 eine Lufteintrittsöffnung 53 für den Luftstrom 8 (Fig. 18) auf. An der Unterseite 54 (Fig. 23) ist der Grundkörper 51 vorzugsweise geschlossen ausgeführt. Der Luftstrom 8 (Fig. 18) wird von oben nach unten durch die Lufteintrittsöffnung 53 in den Filtereinsatz 50 geführt. Dann strömt der Luftstrom 8 aus dem hohlen Grundkörper 51 zur Außenseite des Filtereinsatzes 50 in weitere Hauptströmungsrichtungen 36 aufgeteilt horizontal durch die Labyrinth-Filter 35. Über dem Filtereinsatz 50 ist eine erfindungsgemäße Leitvorrichtung 18 erkennbar, wie sie bereits zuvor beschrieben wurde.

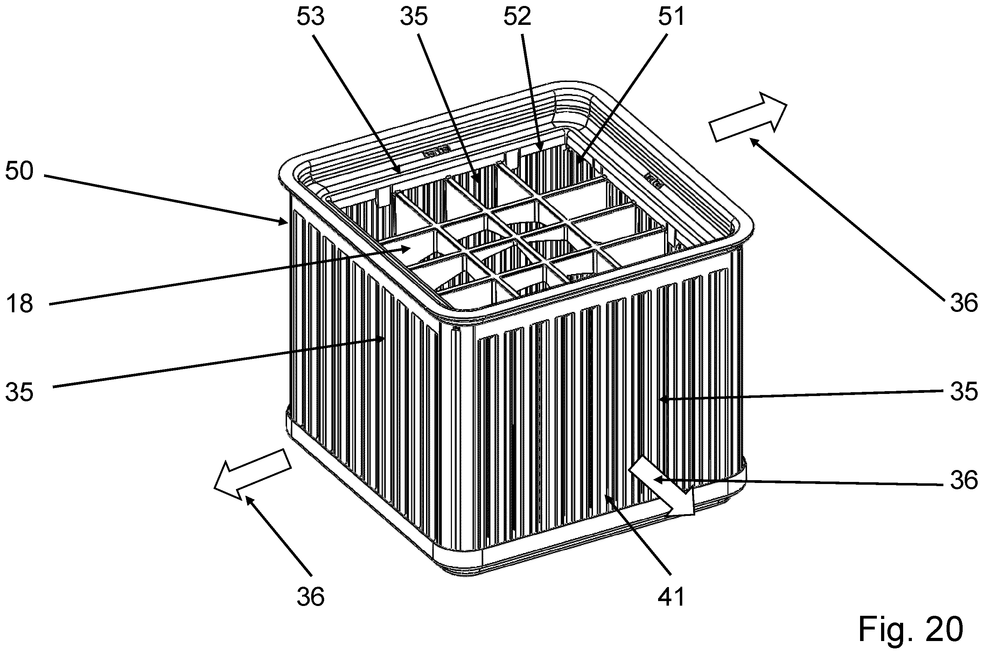

Die Figur 20 zeigt den Filtereinsatz 50 gemäß Figur 20, wobei diese Leitvorrichtung 18 in den hohlen Grundkörper 51 des Filtereinsatzes 50 eingesetzt ist. Bei der Ausführung der Leitvorrichtung 18 handelt es sich um die Ausgestaltung gemäß der Figuren 11 bis 13.

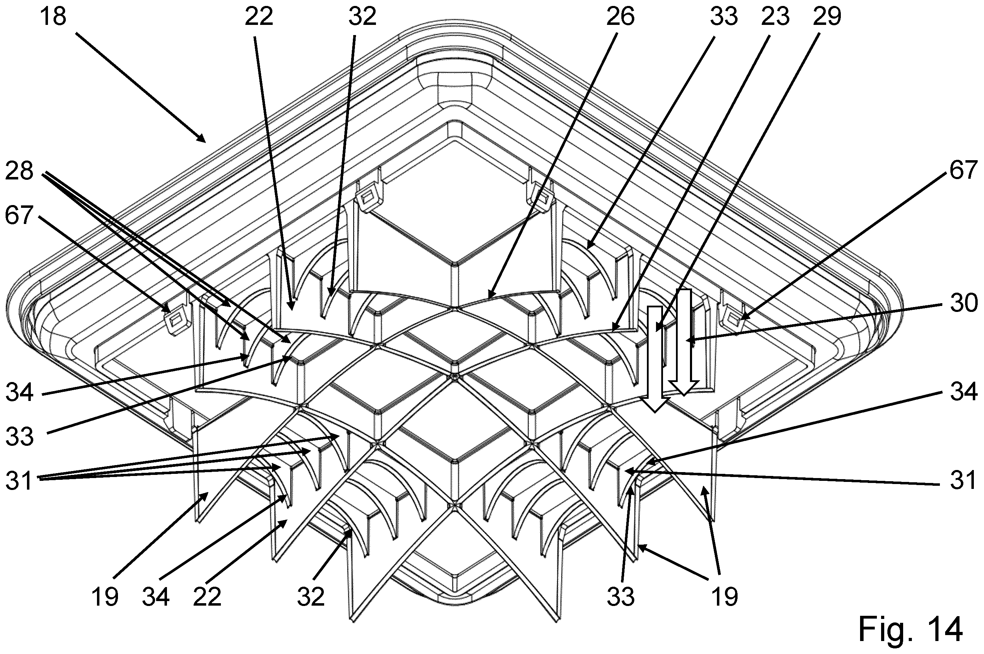

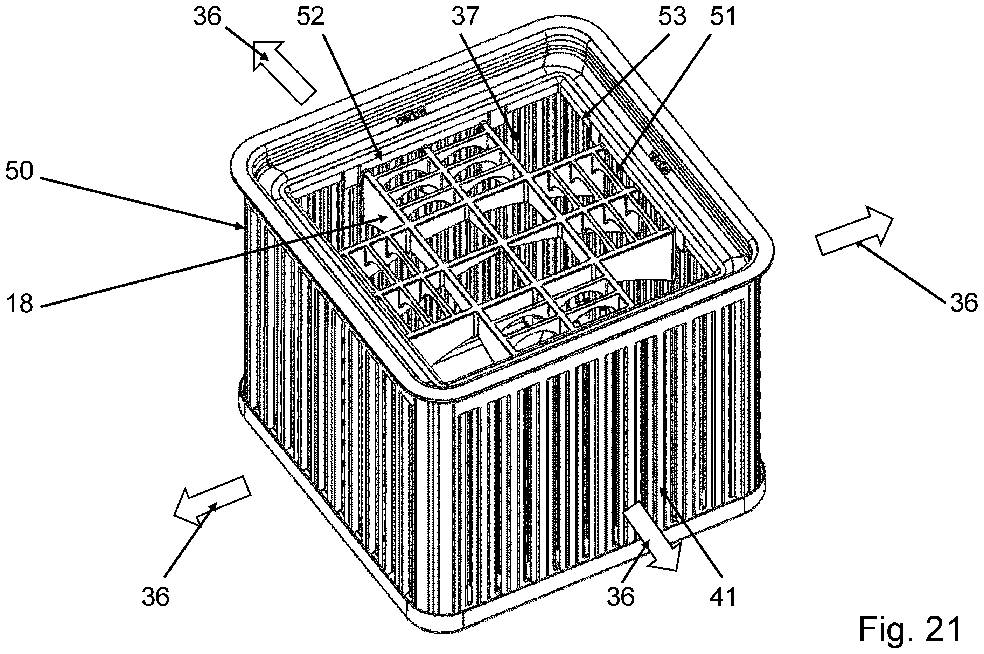

In den Filtereinsatz 50 kann aber alternativ auch eine Leitvorrichtung 18 gemäß der Ausführung aus Figur 14 eingesetzt werden, wie die Figur 21 zeigt.

Zur Herstellung des Filtereinsatzes 50 werden die Labyrinth-Filter 35 mit der Unterseite 54 des Grundkörpers 51 verbunden. Anschließend wird ein Oberteil, bevorzugt samt Leitvorrichtung 18 (Fig. 19) in die Labyrinth-Filter 35 eingesetzt und in vorteilhafter Weise mit Clips 67 verrastet.

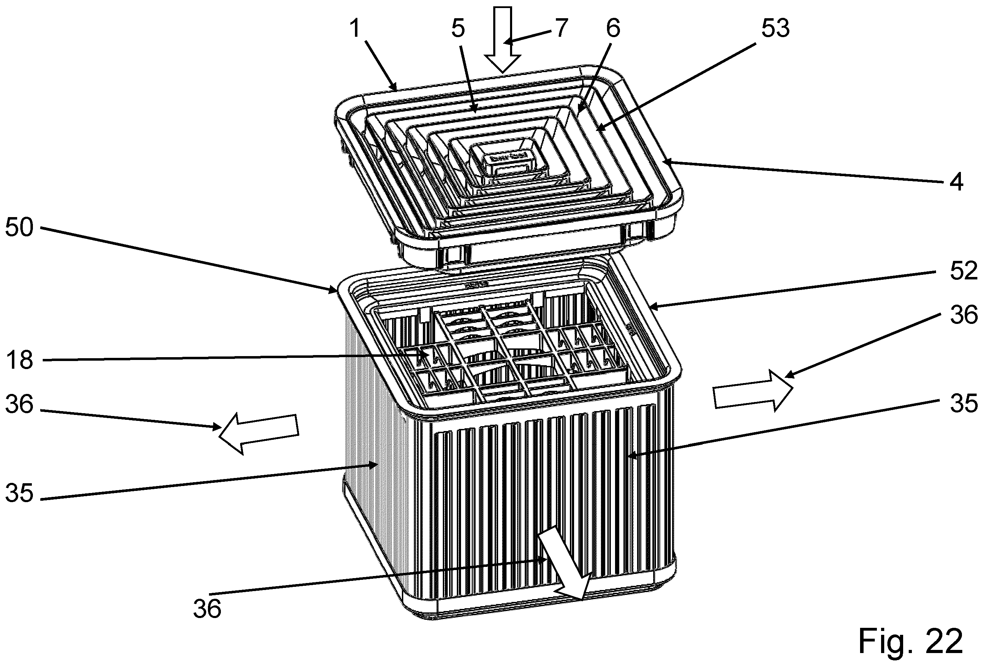

In Figur 22 wird bereits angedeutet, dass der hohle Grundkörper 51 des Filtereinsatzes 50 mit einem wie zuvor und im Folgenden näher beschrieben Einströmgitter 1 von oben abgedeckt werden kann.

Die Figur 23 zeigt den Filtereinsatz 50 gemäß der Figur 22, in einem Kombinationsgerät 59 eingesetzt. Bevorzugt dient die geschlossene Unterseite 54 des Grundkörpers 51 als Fettauffangschale des Filtereinsatzes 50. Alternativ kann die Unterseite 54 des Grundkörpers 51 auch offen sein. Das vom Filtereinsatz 50 aus dem Luftstrom 8 abgeschiedene Fett und Öl kann dann auch in einer vom Filtereinsatz 50 separaten Auffangschale unter dem Filtereinsatz 50 aufgefangen werden. In dem Boden 64 des Abzugsgehäuses 56 ist unter der Luftansaugöffnung 2 auch ein Auffangbecken 65 gebildet, das durch eine Flüssigkeitssperre 66 begrenzt ist. Dieses Auffangbecken 65 kann in die Luftansaugöffnung 2 eintretende Flüssigkeiten auffangen oder auch vom Fettfiltereinsatz 50 abgeschiedene Bestandteile, wie Fett und Öl, am Boden 64 des Abzugsgehäuses 56 sammeln.

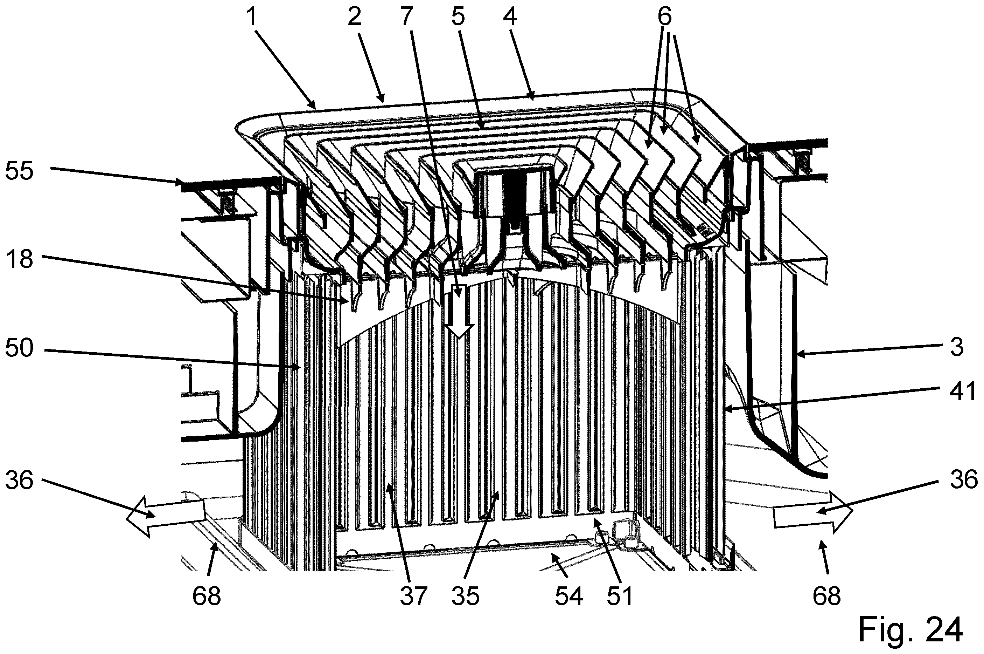

Die Figur 24 zeigt, dass der gemäß Figur 23 eingesetzte Filtereinsatz 50 von oben mit dem zuvor und nachfolgend näher beschriebenen Einströmgitter 1 abgedeckt ist. Der Luftstrom 8 (Fig. 23) weist durch den Filtereinsatz 50 eine erste, von oben nach unten gerichtete Hauptströmungsrichtung 7 durch das Einströmgitter 1 auf. Stromabwärts des Einströmgitters 1 wird der Luftstrom 8 (Fig. 3) im hohlen Grundkörper 51 seitlich umgelenkt. Dann wird der Luftstrom 8 in weiteren Hauptströmungsrichtungen 36 des aufgeteilten Luftstroms 8 horizontal durch die Labyrinth-Filter 35 geleitet. In dem hohlen Grundkörper 51 unter dem Einströmgitter 1 wird eine Leitvorrichtung 18 eingesetzt, welche am Einströmgitter 1 abgeschiedene Bestandteile von Kochdünsten 14, insbesondere Fett und/oder Öl, in Hauptströmungsrichtung 7 des Luftstromes 8 durch das Einströmgitter 1 und die Leitvorrichtung 18 von innen seitlich nach außen zu den Labyrinth-Filtern 35 ableitet. Die seitliche Ableitung der vom Einströmgitter 1 abgeschiedenen Partikel über die darunter angeordnete Leiteinrichtung 18 stellt sicher, dass bereits abgeschiedene Partikel nicht wieder vom Luftstrom 8 mitgerissen werden. Die Leitlamellen 19 (Fig. 13) der Leitvorrichtung 18 sind vorteilhalfterweise so angeordnet, dass diese die Gitterlamellen 6 (Fig. 10) des Einströmgitters 1 verlängern. So können die vom Einströmgitter 1 abgeschiedenen Bestandteile der Kochdünste leicht von den Luftleitflächen 10, 11 (Fig. 10) auf die Fettanhaftflächen 22 (Fig. 11) der Leitvorrichtung 18 übergehen. Die Leitvorrichtung 18 dient auch zur optimalen Anströmung der Labyrinth-Filter 35 des Filtereinsatzes 50. Stromabwärts des Filtereinsatzes 50 ist eine Ansaugkammer 68 vor dem Lüfter 58 im Abzugsgehäuse 56 gebildet, welche den Filtereinsatz 50 umgibt.

### Bezugszeichenliste

1 Einströmgitter
2 Luftansaugöffnung
3 Dunstabzug
4 Rahmen
5 Lamellenstruktur
6 Gitterlamellen
7 erste Hauptströmungsrichtung
8 Luftstrom
9 Erste Luftleitfläche
10 Zweite Luftleitfläche
11 Erster Teilluftstrom
12 Zweiter Teilluftstrom
13 Prallkante
14 Kochdünste
15 erste Krümmung
16 zweite Krümmung
17 Grifflasche
18 Leitvorrichtung
19 Erste Leitlamelle
20 Dritter Teilluftstrom
21 Vierter Teilluftstrom
22 Fettanhaftflächen
23 Unterseite
24 Bogenförmige Ausnehmung
25 Leitnut
26 Gewölbestruktur
27 Hüllfläche
28 Zweite Leitlamelle
29 Fünfter Teilluftstrom
30 Sechster Teilluftstrom
31 Weitere Fettanhaftflächen
32 Weitere Unterseite
33 Weitere bogenförmige Ausnehmung
34 Weitere Leitnut
35 Labyrinth-Filter
36 Weitere Hauptströmungsrichtung
37 erste Luftleitprofile (erste Reihe)
38 Vorderseite (erste Luftleitprofile)
39 Zweite Luftleitprofile (zweite Reihe)
40 Vorderseite (zweite Luftleitprofile)
41 Dritte Luftleitprofile (dritte Reihe)
42 Vorderseite (dritte Luftleitprofile)
43 Rückseite (erste Luftleitprofile)
44 Rückseite (zweite Luftleitprofile)
45 Erstes Metallblech (erste Luftleitprofile)
46 Zweites Metallblech (zweite Luftleitprofile)
47 Drittes Metallblech (dritte Luftleitprofile)
48 Erste Lücken (erste Reihe)
49 Zweite Lücken (zweite Reihe)
50 Filtereinsatz
51 Hohler Grundkörper
52 Oberseite (Grundkörper)
53 Lufteintrittsöffnung
54 Unterseite (Grundkörper)
55 Kochfeld
56 Abzugsgehäuse
57 Luftauslass
58 Lüfter
59 Kombinationsgerät
60 nach unten weisende Richtung
61 Kochgeschirr
62 Rastverbindungen
63 Kreuzungen
64 Boden (Abzugsgehäuse)
65 Auffangbecken
66 Flüssigkeitssperre
67 Clips
68 Ansaugkammer

## Patentansprüche

1. Einströmgitter (1) zum Einsatz in einer Luftansaugöffnung (2) eines Dunstabzugs (3) mit
- mindestens einem Rahmen (4),
- einer am Rahmen (4) gebildeten Lamellenstruktur (5), wobei die Lamellenstruktur (5) mehrere zueinander beabstandet angeordnete Gitterlamellen (6) aufweist, die mit dem Rahmen (4) verbunden sind, wobei die Gitterlamellen (6) jeweils sich entlang einer Hauptströmungsrichtung (7) eines Luftstromes (8) erstreckende Luftleitflächen (9, 10) bilden, wobei der Luftstrom (8) an den Gitterlamellen (6) in Teilluftströme (11, 12) aufgeteilt wird,
**dadurch gekennzeichnet,**
**dass** die Luftleitflächen (9, 10) dazu ausgebildet sind, die Teilluftströme (11, 12) des aufgeteilten Luftstroms (8) jeweils in Richtung einer durch die Gitterlamellen (6) gebildeten Prallkante (13) zu lenken, wobei die Teilluftströme (11, 12) an den Prallkanten (13) umgelenkt und von den Luftleitflächen (10, 11) weiter in Hauptströmungsrichtung (7) des Luftstromes (8) durch das Einströmgitter (1) an den Gitterlamellen (6) vorbeigeführt werden.

2. Einströmgitter (1) nach Anspruch 1, **dadurch gekennzeichnet, dass** das Einströmgitter (1) als Fliehkraftabscheider zur Abscheidung eines oder mehrerer Bestandteile von Kochdünsten (14) ausgebildet ist, sodass sich einer oder mehrere Bestandteile der Kochdünste (14), insbesondere Fett und Öl, mittels Fliehkraft aus dem umgelenkten Luftstrom (8) trennen und an den Prallkanten (13) der Gitterlamellen (6) und/oder an den Luftleitfläche (10, 11) der Gitterlamellen (6) ablagern.

3. Einströmgitter (1) nach Anspruch 1 oder 2, **dadurch gekennzeichnet, dass** die Luftleitflächen (10, 11) die Teilluftströme (11, 12) in Hauptströmungsrichtung (7) von radial außen nach radial innen und dann wieder nach radial außen leiten.

4. Einströmgitter (1) nach einem der vorhergehenden Ansprüche, **dadurch gekennzeichnet, dass** die Luftleitflächen (9, 10) eine konkav nach außen orientierte erste Krümmung (15) aufweisen, wobei die Prallkanten (13) eine konvex nach außen orientierte zweite Krümmung (16) aufweisen.

5. Einströmgitter (1) nach einem der vorhergehenden Ansprüche, **dadurch gekennzeichnet, dass** der Rahmen (4) außen umlaufend um die innen angeordneten Gitterlamellen (6) angeordnet ist.

6. Einströmgitter (1) nach Anspruch 5, dass die Gitterlamellen (6) umlaufend um eine zentrale Grifflasche (17) des Einströmgitters (1) herum angeordnet sind.

7. Leitvorrichtung (18) zur Ableitung eines oder mehrerer Bestandteile von Kochdünsten (14), insbesondere Fett und/oder Öl, aus einem Luftstrom (8), der eine von oben nach unten gerichtete Hauptströmungsrichtung (7) durch die Leitvorrichtung (18) aufweist, wobei die Leitvorrichtung (18) mindestens eine erste Leitlamelle (19) aufweist, wobei die erste Leitlamelle (19) den Luftstrom (8) in Teilluftströme (20, 21) aufteilt, wobei die erste Leitlamelle (19) sich entlang der Hauptströmungsrichtung (7) erstreckende Fettanhaftflächen (22) bildet, wobei die erste Leitlamelle (19) an ihrer Unterseite (23) eine bogenförmige Ausnehmung (24) aufweist, sodass die Fettanhaftflächen (22) der ersten Leitlamelle (19) außen eine größere Vertikalerstreckung aufweisen als innen, wobei die Bogenform der Ausnehmung (24) dazu ausgebildet ist, an den Fettanhaftflächen (22) anhaftende Bestandteile von Kochdünsten (14), insbesondere Fett und/oder Öl, in Hauptströmungsrichtung (7) des Luftstromes (8) endseitig der Fettanhaftflächen (22) von innen seitlich nach außen aus dem Luftstrom (8) abzuleiten.

8. Leitvorrichtung (18) nach Anspruch 7, **dadurch gekennzeichnet, dass** an der Unterseite (23) der ersten Leitlamelle (19) eine gegen die Hauptströmungsrichtung (7) des Luftstroms (8) in die erste Leitlamelle (19) vertiefte Leitnut (25) ausgebildet ist, wobei die Leitnut (25) dazu ausgebildet ist, an der Unterseite (23) der ersten Leitlamelle (19) anhaftende Bestandteile von Kochdünsten (14), insbesondere Fett und/oder Öl zu sammeln und in der Leitnut (25) aus dem Luftstrom (8) entlang der Unterseite (23) in seitlicher Richtung abzuleiten.

9. Leitvorrichtung (18) nach Anspruch 7 oder 8, **dadurch gekennzeichnet, dass** die Leitvorrichtung (18) mehrere erste Leitlamellen (19) aufweist, die parallel zueinander und/oder sich zumindest teilweise kreuzend angeordnet sind.

10. Leitvorrichtung (18) nach Anspruch 9, **dadurch gekennzeichnet, dass** die ersten Leitlamellen (19) mit ihren bogenförmigen Ausnehmungen (24) eine gemeinsame Gewölbestruktur (26) bilden, wobei die Unterseiten (23) der ersten Leitlamellen (19) eine gewölbeförmige Hüllfläche (27) aufspannen.

11. Leitvorrichtung (18) nach Anspruch 9 oder 10, **dadurch gekennzeichnet, dass** die Leitvorrichtung (18) mindestens eine zweite Leitlamelle (28) zwischen jeweils zwei ersten Leitlamellen (19) aufweist, wobei die zweite Leitlamelle (28) den Luftstrom (8) in Teilluftströme (29, 30) aufteilt, wobei die zweite Leitlamelle (28) weitere sich entlang der Hauptströmungsrichtung (7) des Luftstromes (8) erstreckende Fettanhaftflächen (31) bildet, wobei die zweite Leitlamelle (28) an ihrer Unterseite (32) eine weitere bogenförmige Ausnehmung (33) aufweist, sodass die weiteren Fettanhaftflächen (31) der zweiten Leitlamelle (28) außen eine größere Vertikalerstreckung aufweisen als innen, wobei die Bogenform der weiteren Ausnehmung (33) dazu ausgebildet ist, an den weiteren Fettanhaftflächen (31) anhaftende Bestandteile von Kochdünsten (14), insbesondere Fett und/oder Öl, in Hauptströmungsrichtung (7) des Luftstromes (8) endseitig der weiteren Fettanhaftflächen (31) von innen seitlich nach außen aus dem Luftstrom (8) abzuleiten.

12. Leitvorrichtung (18) nach Anspruch 11, **dadurch gekennzeichnet, dass** an der Unterseite (32) der zweiten Leitlamelle (28) eine weitere, gegen die Hauptströmungsrichtung (7) des Luftstroms (8) in die zweite Leitlamelle (28) vertiefte Leitnut (34) ausgebildet ist, wobei die weitere Leitnut (34) dazu ausgebildet ist, an der Unterseite (32) der zweiten Leitlamelle (28) anhaftende Bestandteile von Kochdünsten (14), insbesondere Fett und/oder Öl zu sammeln und in der weiteren Leitnut (34) aus dem Luftstrom (8) entlang der weiteren Unterseite (32) in seitlicher Richtung abzuleiten.

13. Leitvorrichtung (18) nach Anspruch 12, **dadurch gekennzeichnet, dass** die Leitvorrichtung (18) mehrere zweite Leitlamellen (28) aufweist, die parallel zueinander und/oder sich zumindest teilweise kreuzend angeordnet sind.

14. Labyrinth-Filter (35) zur Abscheidung eines oder mehrerer Bestandteile von Kochdünsten (14), insbesondere Fett und/oder Öl, aus einem Luftstrom (8), wobei der Labyrinth-Filter (35) umfasst:
- eine von dem Luftstrom (8) in einer Hauptströmungsrichtung (36) anströmbare erste Reihe länglicher, parallel und beabstandet voneinander angeordneter erster Luftleitprofile (37), die an ihrer dem Luftstrom (8) zugewandten Vorderseite (38) konvex gekrümmt sind,
- eine von dem Luftstrom (8) anströmbare zweite Reihe länglicher, parallel und beabstandet voneinander angeordneter zweiter Luftleitprofile (39) stromabwärts der ersten Reihe, wobei die zweiten Luftleitprofile (39) an ihrer dem Luftstrom (8) zugewandten Vorderseite (40) konkav gekrümmt sind und in Richtung quer zu dem Luftstrom (8) seitlich versetzt zu den ersten Luftleitprofilen (37) angeordnet sind,
- eine von dem Luftstrom (8) anströmbare dritte Reihe länglicher, parallel und beabstandet voneinander angeordneter dritter Luftleitprofile (41) stromabwärts der zweiten Reihe, wobei die dritten Luftleitprofile (41) an ihrer dem Luftstrom (8) zugewandten Vorderseite (42) ebenfalls konkav gekrümmt sind und in Richtung quer zu dem Luftstrom (8) seitlich versetzt zu den zweiten Luftleitprofilen (39) angeordnet sind,
- wobei die ersten, zweiten und dritten Luftleitprofile (37, 39, 41) in der Weise zusammenwirken, dass
- die ersten Luftleitprofile (37) den Luftstrom (8) aufteilen und auf die zweiten Luftleitprofile (39) lenken,
- die zweiten Luftleitprofile (39) den aufgeteilten Luftstrom (8) in Richtung auf die Rückseiten (43) der ersten Luftleitprofile (37) umlenken,
- die dritten Luftleitprofile (41) den an den Rückseiten (43) der ersten Luftleitprofile (37) umgelenkten Luftstrom (8) auf die Rückseiten (44) der zweiten Luftleitprofile (39) lenken und den an den Rückseiten (44) der zweiten Luftleitprofile (39) ein weiteres Mal umgelenkten Luftstrom (8) aus dem Labyrinth-Filter (35) heraus leiten.

15. Labyrinth-Filter (35) nach Anspruch 14, **dadurch gekennzeichnet, dass** die einzelnen Reihen der Luftleitprofile (37, 39, 41) jeweils als Stanzbiegeteil aus einem Metallblech (45, 46, 47) geformt sind, wobei die einzelnen Metallbleche (45, 46, 47) zum Labyrinth-Filter (35) miteinander verbunden sind.

16. Labyrinth-Filter (35) nach Anspruch 14 oder 15, **dadurch gekennzeichnet, dass** die Luftleitprofile (37, 39, 41) in dem Labyrinth-Filter (35) in Richtung quer zu ihrer Längserstreckung von dem Luftstrom (8) angeströmt werden.

17. Labyrinth-Filter (35) nach einem der Ansprüche 14 bis 16, **dadurch gekennzeichnet, dass** die zweiten und dritten Luftleitprofile (39, 41) jeweils einen von der Hauptströmungsrichtung (36) aus gesehen konkaven, insbesondere C-förmigen Querschnitt aufweisen.

18. Labyrinth-Filter (35) nach einem der Ansprüche 14 bis 17, **dadurch gekennzeichnet, dass** die ersten Luftleitprofile (37) jeweils einen von der Hauptströmungsrichtung (36) aus gesehen konvexen, insbesondere C-förmigen Querschnitt aufweisen.

19. Labyrinth-Filter (35) nach einem der Ansprüche 14 bis 18, **dadurch gekennzeichnet, dass** die zweiten Luftleitprofile (37) zu den ersten Luftleitprofilen (37) seitlich, d.h. in Richtung quer zur Hauptströmungsrichtung (36) versetzt angeordnet sind, so dass die zweiten Luftleitprofile (39) Lücken (48) zwischen den nebeneinander aufgereihten ersten Luftleitprofilen (37) überdecken.

20. Labyrinth-Filter (35) nach einem der Ansprüche 14 bis 19, **dadurch gekennzeichnet, dass** die dritten Luftleitprofile (37) zu den zweiten Luftleitprofilen (39) seitlich, d.h. in Richtung quer zur Hauptströmungsrichtung (36) versetzt angeordnet sind, so dass die dritten Luftleitprofile (41) Lücken (49) zwischen den nebeneinander aufgereihten zweiten Luftleitprofilen (39) überdecken.

21. Filtereinsatz (50) zur Filterung eines oder mehrerer Bestandteile von Kochdünsten (14), insbesondere Fett und/oder Öl, aus einem Luftstrom (8), wobei der Filtereinsatz (50) einen hohlen Grundkörper (51), gebildet aus einem Labyrinth-Filter (35), insbesondere einem Labyrinth-Filter (35) nach einem der Ansprüche 14 bis 20, oder mehreren Labyrinth-Filtern (35), insbesondere mehreren Labyrinth-Filtern (35) nach einem der Ansprüche 14 bis 20, aufweist, wobei der Labyrinth-Filter (35) über den hohlen Grundkörper (51) des Filtereinsatzes (50) vom Luftstrom (8) angeströmt wird und von dem Luftstrom (8) zur Außenseite des Filtereinsatzes (50) durchströmt wird oder wobei die Labyrinth-Filter (35) über den hohlen Grundkörper (51) des Filtereinsatzes (50) von dem Luftstrom (8) angeströmt werden und von dem Luftstrom (8) zur Außenseite des Filtereinsatzes (50) durchströmt werden.

22. Filtereinsatz (50) nach Anspruch 21, **dadurch gekennzeichnet, dass** der Labyrinth-Filter (35) als Körperwandung das Innere des Grundkörpers (51) entlang seines Außenumfangs umschließt oder dass die Labyrinth-Filter (35) als Körperwandung das Innere des Grundkörpers (51) entlang seines Außenumfangs umschließen.

23. Filtereinsatz (50) nach Anspruch 21 oder 22, **dadurch gekennzeichnet, dass** der Grundkörper (51) an seiner Oberseite (52) eine Lufteintrittsöffnung (53) aufweist und an seiner Unterseite (54) vorzugsweise geschlossen ist, wobei der Labyrinth-Filter (35) als Körperwandung das Innere des Grundkörpers (51) entlang seines seitlichen Außenumfangs umschließt, oder wobei die Labyrinth-Filter (35) als Körperwandung das Innere des Grundkörpers (51) entlang seines seitlichen Außenumfangs umschließen.

24. Filtereinsatz (50) nach einem der Ansprüche 21 bis 23, **dadurch gekennzeichnet, dass** der Grundkörper (51) quaderförmig ist.

25. Filtereinsatz (50) nach einem der Ansprüche 21 bis 24, **dadurch gekennzeichnet, dass** der hohle Grundkörper (51) mit einem Einströmgitter (1), insbesondere einem Einströmgitter (1) nach einem der Ansprüche 1 bis 6, von oben abgedeckt ist.

26. Filtereinsatz (50) nach Anspruch 25, **dadurch gekennzeichnet, dass** der Luftstrom (8) durch den Filtereinsatz (50) eine erste, von oben nach unten gerichtete Hauptströmungsrichtung (7) durch das Einströmgitter (1) aufweist und stromabwärts des Einströmgitters (1) im hohlen Grundkörper (51) seitlich umgelenkt wird, wobei der Luftstrom (8) in weiteren Hauptströmungsrichtungen (36) des aufgeteilten Luftstroms (8) horizontal durch den oder die Labyrinth-Filter (35) geleitet wird.

27. Filtereinsatz (50) nach Anspruch 25 oder 26, **dadurch gekennzeichnet, dass** in dem hohlen Grundkörper (51) unter dem Einströmgitter (1) eine Leitvorrichtung (18) nach einem der Ansprüche 7 bis 13, eingesetzt ist, welche am Einströmgitter (1) abgeschiedene Bestandteile von Kochdünsten (14), insbesondere Fett und/oder Öl, in Hauptströmungsrichtung (7) des Luftstromes (8) durch das Einströmgitter (1) und die Leitvorrichtung (18) von innen seitlich nach außen zu dem Labyrinth-Filter (35) oder zu den Labyrinth-Filtern (35) ableitet.

28. Dunstabzug (3) zum Abzug von Kochdünsten (14) an einem Kochfeld (55) mittels eines Luftstromes (8), mit
- einem Abzugsgehäuse (56), das wenigstens eine Luftansaugöffnung (2) und wenigstens einen Luftauslass (57) für den Luftstrom (8) aufweist,
- wenigstens einem in dem Abzugsgehäuse (56) angeordneten Lüfter (58) zur Erzeugung des Luftstromes (8), und
- wenigstens einem in dem Abzugsgehäuse (56) in dem Luftstrom (8) zwischen Luftansaugöffnung (2) und Lüfter (58) angeordneten Filtereinsatz (50) nach einem der Ansprüche 21 bis 27, wobei der Luftstrom (8) in dem Abzugsgehäuse (56) von der Luftansaugöffnung (2) über den Filtereinsatz (50) zu dem Lüfter (58) geführt und von dem Lüfter (58) über den Luftauslass (57) aus dem Abzugsgehäuse (56) geblasen wird.

29. Kombinationsgerät (59) mit einem Kochfeld (55) und einem Dunstabzug (3) nach Anspruch 28, wobei der Dunstabzug (3) als Kochfeldabzug zum Abzug von Kochdünsten (14) von über dem Kochfeld (55) in nach unten weisender Richtung (60) integriert ist, wobei der Filtereinsatz (50) in die in dem Kochfeld (55) ausgebildete Luftansaugöffnung (2) des Dunstabzugs (3) einsetzbar und aus dieser entnehmbar ist.
